(19) Europäisches Patentamt
European Patent Office
Office européen des brevets

(11) **EP 3 686 653 B1**

(12) **EUROPÄISCHE PATENTSCHRIFT**

(45) Veröffentlichungstag und Bekanntmachung des Hinweises auf die Patenterteilung:
**05.07.2023 Patentblatt 2023/27**

(21) Anmeldenummer: **20158537.9**

(22) Anmeldetag: **09.01.2013**

(51) Internationale Patentklassifikation (IPC):
***G02B 27/64*** *(2006.01)*

(52) Gemeinsame Patentklassifikation (CPC):
**G02B 23/18; G02B 27/646**

(54) **OPTISCHES SYSTEM ZUR ABBILDUNG EINES OBJEKTS SOWIE VERFAHREN FÜR DAS OPTISCHE SYSTEM**

OPTICAL SYSTEM FOR IMAGING AN OBJECT AND METHOD FOR THE OPTICAL SYSTEM

SYSTÈME OPTIQUE POUR FORMER UNE IMAGE D'UN OBJET ET PROCÉDÉ POUR CE SYSTÈME OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2012 DE 102012200514**
**13.01.2012 US 201261586305 P**

(43) Veröffentlichungstag der Anmeldung:
**29.07.2020 Patentblatt 2020/31**

(62) Dokumentnummer(n) der früheren Anmeldung(en) nach Art. 76 EPÜ:
**13701217.5 / 2 802 934**

(73) Patentinhaber: **Carl Zeiss AG**
**73447 Oberkochen (DE)**

(72) Erfinder: **Bach, Dr. Christian**
**35418 Buseck (DE)**

(74) Vertreter: **Tongbhoyai, Martin**
**Freischem & Partner**
**Patentanwälte mbB**
**Salierring 47-53**
**50677 Köln (DE)**

(56) Entgegenhaltungen:
**DE-A1- 19 818 467      DE-C2- 3 933 255**
**US-A- 5 672 862        US-A1- 2004 125 213**

## Beschreibung

Die Erfindung betrifft ein optisches System zur Abbildung eines Objekts, und ein Verfahren für das optische System.

Aus dem Stand der Technik ist ein binokulares Fernglas bekannt, das ein erstes Gehäuseteil und ein zweites Gehäuseteil aufweist. In dem ersten Gehäuseteil ist ein erstes optisches Teilsystem für ein erstes Auge eines Benutzers angeordnet. In dem zweiten Gehäuseteil ist ein zweites optisches Teilsystem für ein zweites Auge eines Benutzers angeordnet. Das erste Gehäuseteil und das zweite Gehäuseteil sind über eine Knickbrücke miteinander verbunden. Die Knickbrücke weist ein an dem ersten Gehäuseteil angeordnetes erstes Scharnierteil auf. Ferner weist die Knickbrücke ein an dem zweiten Gehäuseteil angeordnetes zweites Scharnierteil auf. Die Knickbrücke ermöglicht die Einstellung einer Pupillendistanz derart, dass das erste Gehäuseteil und das zweite Gehäuseteil relativ zueinander angeordnet werden, sodass das erste Gehäuseteil an einem der beiden Augen des Benutzers angeordnet ist und dass das zweite Gehäuseteil an dem anderen der beiden Augen des Benutzers angeordnet ist.

Unter einem optischen System wird vorstehend und auch nachstehend nicht nur ein binokulares Fernglas, sondern jedes optische System verstanden, also beispielsweise auch ein monokulares optisches System, insbesondere in Form eines Fernrohrs.

Das durch das Fernrohr oder das Fernglas von einem Beobachter erfasste Bild wird oft verwackelt wahrgenommen, da Zitterbewegungen oder Drehbewegungen der Hände des Benutzers, aber auch Bewegungen des Untergrundes wiederum Bewegungen des optischen Systems verursachen. Um dieses zu umgehen, ist es bekannt, Bilder in einem optischen System zu stabilisieren. Bekannte Lösungen verwenden Stabilisierungseinrichtungen zur Stabilisierung des Bildes mittels einer mechanischen Einrichtung und/oder einer elektronischen Einrichtung.

Aus der DE 23 53 101 C3 ist ein optisches System in Form eines Fernrohrs bekannt, das ein Objektiv, eine Bildstabilisierungseinheit in Form eines Prismenumkehrsystems sowie ein Okular aufweist. Das Prismenumkehrsystem ist kardanisch in einem Gehäuse des Fernrohrs gelagert. Hierunter wird verstanden, dass das Prismenumkehrsystem derart in dem Gehäuse des Fernrohrs angeordnet ist, dass das Prismenumkehrsystem um zwei zueinander rechtwinklig angeordnete Achsen drehbar gelagert ist. Zur drehbaren Lagerung wird in der Regel eine Vorrichtung verwendet, die als Kardanik bezeichnet wird. Ein Gelenkpunkt des kardanisch im Gehäuse gelagerten Prismenumkehrsystems ist mittig zwischen einer bildseitigen Hauptebene des Objektivs und einer objektseitigen Hauptebene des Okulars angeordnet. Das kardanisch gelagerte Prismenumkehrsystem wird aufgrund seiner Trägheit durch auftretende Drehzitterbewegungen nicht bewegt. Es bleibt somit fest im Raum stehen. Auf diese Weise wird eine Bildverschlechterung, die aufgrund der Drehzitterbewegung des Gehäuses entsteht, kompensiert.

Aus der DE 39 33 255 C2 ist ein binokulares Fernglas mit einer Bildstabilisierung bekannt, das ein Prismenumkehrsystem aufweist. Das Prismenumkehrsystem weist Porro-Prismen auf, die jeweils eine Kippachse aufweisen. Die Porro-Prismen sind um ihre jeweilige Kippachse schwenkbar ausgebildet. Zur Schwenkung der Porro-Prismen sind Motoren vorgesehen. Die Schwenkung erfolgt in Abhängigkeit einer Zitterbewegung, die ein Wackeln eines beobachten Bildes verursacht.

Ein weiteres optisches System mit einer Bildstabilisierungseinheit ist aus der US 5,910,859 bekannt. Die Bildstabilisierungseinheit dieses optischen Systems ist in Form eines Umkehrsystems ausgebildet, das in einem optisch neutralen Punkt mittig zwischen einem Objektiv und einem Okular angeordnet ist. Unter einem optisch neutralen Punkt wird ein Punkt verstanden, um den das Objektiv und das Okular relativ im Raum gedreht werden können, ohne dass die Position eines Bildes eines Objekts sich verschiebt, wobei das Umkehrsystem fest im Raum stehen bleibt. Das Umkehrsystem ist um den optisch neutralen Punkt sowie um zwei Achsen, die senkrecht zur optischen Achse angeordnet sind, beweglich angeordnet. Wenn nun das Umkehrsystem auch bei einer Zitterbewegung stabil im Raum gehalten wird, dann wird auch das Bild eines Objekts bei Betrachtung des Objekts mittels dieses bekannten optischen Systems stabilisiert. Der optisch neutrale Punkt lässt sich auch wie folgt beschreiben. Unter einem optisch neutralen Punkt wird ein Punkt auf einer optischen Achse zwischen einem Objektiv und einem Okular verstanden, um den eine Bildstabilisierungseinheit drehbar angeordnet ist, so dass bei einer Drehzitterbewegung um einen beliebigen Punkt die Richtung des Bildes eines Objekts, welches durch das Objektiv und das Okular betrachtet wird, fest im Raum stehen bleibt, ebenso wie die Bildstabilisierungseinheit.

Aus dem Stand der Technik ist auch ein Fernglas bekannt, das ein starres Gehäuse aufweist, in dem für beide Augen eines Benutzers ein erstes optisches Teilsystem und ein zweites optisches Teilsystem angeordnet sind. Zur Stabilisierung eines Bildes aufgrund des bereits oben genannten Problems ist eine einzelne Bildstabilisierungseinheit in dem Gehäuse angeordnet, die zur Bildstabilisierung sowohl hinsichtlich des ersten optischen Teilsystems als auch hinsichtlich des zweiten optischen Teilsystems verwendet wird. Baubedingt ist diese einzelne Bildstabilisierungseinheit mindestens so breit wie der Abstand des ersten optischen Teilsystems zu dem zweiten optischen Teilsystem. Bei dem bekannten Fernglas ist es vorgesehen, dass eine Einstellung der Pupillendistanz eines Benutzers möglich ist. Hierzu sind in dem starren Gehäuse drehbare rhombische Prismen angeordnet, die zwischen dem starren Gehäuse und einem Okular eingebaut sind. Werden die rhombischen Prismen gedreht, verändert sich der Abstand der Okulare, sodass die Pupillendistanz eines Benutzers eingestellt werden kann.

Um bei dem vorbeschriebenen bekannten Fernglas nun eine Zitterbewegung oder eine weitere Bewegung des Fernglases zu ermitteln, werden Drehwinkeldetektoren eingesetzt. Mittels dieser Drehwinkeldetektoren ist es möglich, Drehzitterbewegungen um zwei Achsen zu messen, welche senkrecht zur optischen Achse des Fernglases ausgerichtet sind. Die beiden Achsen (nämlich eine erste Messachse und eine zweite Messachse) sind ebenfalls zueinander senkrecht ausgerichtet. Zur Bildstabilisierung ist das bekannte Fernglas nun mit einer Stellvorrichtung versehen, die in dem starren Gehäuse angeordnet ist und welche die Bildstabilisierungseinheit zur Bildstabilisierung verstellt. Dabei wird die Bildstabilisierungseinheit entlang der optischen Achse bewegt. Ferner ist es vorgesehen, die Bildstabilisierungseinheit um eine erste Drehachse sowie um eine zweite Drehachse zu drehen, wobei die erste Drehachse und die zweite Drehachse senkrecht zur optischen Achse ausgerichtet sind. Um jedoch den Drehwinkel, um welchen die Bildstabilisierungseinheit um die erste Drehachse und die zweite Drehachse gedreht werden soll, genau zu bestimmen, ist es erforderlich, dass die relative Lage der ersten Messachse und der zweiten Messachse eines Drehwinkeldetektors zu der ersten Drehachse und der zweiten Drehachse der Bildstabilisierungseinheit beachtet wird. Bei dem aus dem Stand der Technik bekannten Fernglas mit einem starren Gehäuse ist es möglich, die relative Lage der ersten Drehachse und der zweiten Drehachse sowie der ersten Messachse und der zweiten Messachse so auszubilden, dass die beiden Achsenpaare aufeinander fallen. Der Drehwinkel kann dann einfach bestimmt werden.

Hinsichtlich des Standes der Technik wird zusätzlich auf die US 5,672,862 A, die DE 198 18 467 A1 sowie die US 2004/0125213 A1 verwiesen.

Der Erfindung liegt nun die Aufgabe zugrunde, ein Verfahren zur Einstellung einer Position einer Bildstabilisierungseinheit anzugeben, die in einem optischen System angeordnet ist, das eine Knickbrücke aufweist. Darüber hinaus soll ein optisches System angegeben werden, das zur Durchführung dieses Verfahrens geeignet ist.

Erfindungsgemäß wird diese Aufgabe durch ein Verfahren gemäß dem Anspruch 1 gelöst. Ein optische System gemäß dem Anspruch 10 dient der Durchführung der erfindungsgemäßen Verfahren. Weitere Merkmale der Erfindung ergeben sich aus der nachfolgenden Beschreibung, den nachfolgenden Ansprüchen und/oder den beigefügten Figuren.

Die Erfindung betrifft ein Verfahren gemäß den Merkmalen des Anspruchs 1. Das erfindungsgemäße Verfahren gemäß den Merkmalen des Anspruchs 1 ist zur Einstellung einer ersten Position einer ersten Bildstabilisierungseinheit in einem ersten Gehäuse eines optischen Systems und zur Einstellung einer zweiten Position einer zweiten Bildstabilisierungseinheit in einem zweiten Gehäuse des optischen Systems geeignet. Dabei ist es vorgesehen, dass die erste Bildstabilisierungseinheit zusammen mit mindestens einem ersten Drehwinkeldetektor in dem ersten Gehäuse angeordnet ist. Darüber hinaus ist die zweite Bildstabilisierungseinheit zusammen mit mindestens einem zweiten Drehwinkeldetektor in dem zweiten Gehäuse angeordnet. Ferner ist das erste Gehäuse mit dem zweiten Gehäuse über mindestens eine Knickbrücke verbunden. Die Knickbrücke weist ein an dem ersten Gehäuse angeordnetes erstes Scharnierteil und ein an dem zweiten Gehäuse angeordnetes zweites Scharnierteil auf.

Das erfindungsgemäße Verfahren weist nun die nachfolgend erläuterten Schritte auf. Eine Bewegung des optischen Systems wird mittels eines ersten Drehwinkeldetektors detektiert. Ferner wird ein erstes Detektorsignal erzeugt, welches auf einem ersten Messkoordinatensystem des ersten Drehwinkeldetektors basiert. Das erste Messkoordinatensystem umfasst beispielsweise eine erste Messachse und eine zweite Messachse, die senkrecht zueinander angeordnet sind. Beispielsweise sind die erste Messachse und die zweite Messachse jeweils senkrecht zur optischen Achse des optischen Systems ausgerichtet. Darüber hinaus erfolgt ein Detektieren der Bewegung des optischen Systems mittels des zweiten Drehwinkeldetektors. Es wird ein zweites Detektorsignal erzeugt, welches auf einem zweiten Messkoordinatensystem des zweiten Drehwinkeldetektors basiert. Das zweite Messkoordinatensystem wird beispielsweise durch eine dritte Messachse und eine vierte Messachse des zweiten Drehwinkeldetektors gegeben. Diese beiden Messachsen sind senkrecht zueinander angeordnet. Beispielsweise sind die dritte Messachse und die vierte Messachse ebenfalls senkrecht zur optischen Achse des optischen Systems ausgerichtet. Das erfindungsgemäße Verfahren weist ferner die folgenden Schritte auf:

- Transformieren des ersten Detektorsignals in ein drittes Detektorsignal, das auf dem zweiten Messkoordinatensystem des zweiten Drehwinkeldetektors basiert;
- Transformieren des zweiten Detektorsignals in ein viertes Detektorsignal, das auf dem ersten Messkoordinatensystem des ersten Drehwinkeldetektors basiert;
- Berechnen eines ersten Mittelwerts aus dem dritten Detektorsignal und dem zweiten Detektorsignal;
- Berechnen eines zweiten Mittelwerts aus dem vierten Detektorsignal und dem ersten Detektorsignal;
- Bewegen der ersten Bildstabilisierungseinheit basierend auf dem zweiten Mittelwert, sowie
- Bewegen der zweiten Bildstabilisierungseinheit basierend auf dem ersten Mittelwert.

Das vorgenannte erfindungsgemäße Verfahren gemäß dem Anspruch 1 basiert auf den nachstehenden Überlegungen. Es ist vorgesehen, dass sowohl in dem ersten Gehäuse als auch in dem zweiten Gehäuse jeweils mindestens ein Drehwinkeldetektor angeordnet ist. Jeder der beiden Drehwinkeldetektoren weist ein eigenes Koordinatensystem auf, welches in einer festen Relation zu dem Drehkoordinatensystem der ersten Bildstabilisierungseinheit bzw. der zweiten Bildstabilisierungseinheit steht, welche in dem jeweiligen Gehäuse angeordnet ist. Somit können die durch einen in einem der Gehäuse angeordneten Drehwinkeldetektor ermittelten Bewegungsdaten für diejenige Bildstabilisierungseinheit verwendet werden, die im identischen Gehäuse angeordnet ist. Der Relativwinkel zwischen den beiden Gehäusen braucht nicht unbedingt gemessen zu werden. Jeder Drehwinkeldetektor weist ein thermisches Rauschen auf. Der Rauschanteil jedes der beiden Drehwinkeldetektoren ist unterschiedlich. Das Rauschen führt allerdings nicht dazu, dass das gesamte Bild entsprechend dem Rauschanteil bewegt wird, sondern diese Bewegung ist nun für das erste Gehäuse und das zweite Gehäuse unterschiedlich, sodass sich die Bilder für beide Augen eines Benutzers gegeneinander bewegen. Dies ist für den Benutzer unangenehm.

Das erfindungsgemäße Verfahren beruht nun auf der überraschenden Erkenntnis der Überlegungen, dass die Detektorsignale der beiden Drehwinkeldetektoren derart kombiniert werden können, dass ein gemeinsames Signal sowohl für das Teilsystem des ersten Gehäuses als auch das Teilsystem des zweiten Gehäuses erzeugt wird, wobei aber die unterschiedlichen Koordinatensysteme der in den beiden Gehäusen angeordneten Bildstabilisierungseinheiten berücksichtigt werden. Hierbei wird beachtet, dass die beiden Drehwinkeldetektoren im Grunde genommen Detektorsignale erstellen, die auf ein und derselben Bewegung des optischen Systems beruhen. Die überraschende Erkenntnis umfasst auch, das erste Detektorsignal des ersten Drehwinkeldetektors, welcher in dem ersten Gehäuse angeordnet ist, in das zweite Koordinatensystem des zweiten Drehwinkeldetektors, welcher in dem zweiten Gehäuse angeordnet ist, zu transformieren. Umgekehrt wird das zweite Detektorsignal des zweiten Drehwinkeldetektors, welcher im zweiten Gehäuse angeordnet ist, in das erste Koordinatensystem des ersten Drehwinkeldetektors transformiert, welcher im ersten Gehäuse angeordnet ist. Anschließend kann nun der Mittelwert aus dem transformierten Detektorsignal des ersten Drehwinkeldetektors, welcher im ersten Gehäuse angeordnet ist, und dem zweiten Detektorsignal des zweiten Drehwinkeldetektors, welcher im zweiten Gehäuse angeordnet ist, gebildet werden. Dieser Mittelwert wird für die zweite Bildstabilisierungseinheit, welche im zweiten Gehäuse angeordnet ist, verwendet. Darüber hinaus wird der Mittelwert aus dem transformierten zweiten Detektorsignal des zweiten Drehwinkeldetektors, welcher im zweiten Gehäuse angeordnet ist, und dem ersten Detektorsignal des ersten Drehwinkeldetektors, welcher im ersten Gehäuse angeordnet ist, gebildet. Dieser wird für die erste Bildstabilisierungseinheit, welche im ersten Gehäuse angeordnet ist, verwendet.

Das erfindungsgemäße Verfahren weist den Vorteil auf, dass auch das Rauschen der einzelnen Drehwinkeldetektoren reduziert wird und somit das verbleibende Zittern eines Bildes verringert wird. Ein weiterer Vorteil besteht darin, dass ein unterschiedliches Rauschen für Einheiten des ersten Gehäuses und für Einheiten des zweiten Gehäuses symmetrisch auf das erste Gehäuse und das zweite Gehäuse verteilt wird. Es wird explizit darauf hingewiesen, dass das erfindungsgemäße Verfahren nicht auf die Verwendung von zwei Drehwinkeldetektoren eingeschränkt ist. Vielmehr kann das erfindungsgemäße Verfahren auch mehr als zwei Drehwinkeldetektoren verwenden.

Bei einem Ausführungsbeispiel des erfindungsgemäßen Verfahrens ist es zusätzlich vorgesehen, dass das Verfahren die folgenden erläuterten Schritte aufweist. Zum einen kann das Transformieren des ersten Detektorsignals in das dritte Detektorsignal wie folgt erfolgen:

Gleichung 3  $\qquad b_x = a_x \cdot \gamma_1 + a_y \cdot \gamma_2$

Gleichung 4

$$b_y = a_x \cdot \gamma_3 + a_y \cdot \gamma_4$$

wobei

$a_x$    ein erstes Teilsignal der Bewegung des optischen Systems relativ zu einer ersten Messachse des ersten Messkoordinatensystems ist;

$a_y$    ein zweites Teilsignal der Bewegung des optischen Systems relativ zu einer zweiten Messachse des ersten Messkoordinatensystems ist;

$b_x$    ein erstes transformiertes Teilsignal des ersten Teilsignals ist;

$b_y$    ein zweites transformiertes Teilsignal des zweiten Teilsignals ist;

$\gamma_1$    ein erster vorgebbarer Transformationsfaktor ist;

$\gamma_2$    ein zweiter vorgebbarer Transformationsfaktor ist;

$\gamma_3$    ein dritter vorgebbarer Transformationsfaktor ist; und

$\gamma_4$    ein vierter vorgebbarer Transformationsfaktor ist.

Das Transformieren des zweiten Detektorsignals in das vierte Detektorsignal erfolgt durch

Gleichung 5 $\qquad a'_x = b'_x \cdot \gamma'_1 + b'_y \cdot \gamma'_2$

Gleichung 6 $\qquad a'_y = b'_x \cdot \gamma'_3 + b'_y \cdot \gamma'_4$

wobei

$b'_x$     ein drittes Teilsignal der Bewegung des optischen Systems relativ zu einer dritten Messachse des zweiten Messkoordinatensystems ist;

$b'_y$     ein viertes Teilsignal der Bewegung des optischen Systems relativ zu einer vierten Messachse des zweiten Messkoordinatensystems ist;

$a'_x$     ein drittes transformiertes Teilsignal des dritten Teilsignals ist;

$a'_y$     ein viertes transformiertes Teilsignal des vierten Teilsignals ist;

$\gamma'_1$     ein erster vorgebbarer Rücktransformationsfaktor ist;

$\gamma'_2$     ein zweiter vorgebbarer Rücktransformationsfaktor ist;

$\gamma'_3$     ein dritter vorgebbarer Rücktransformationsfaktor ist; und

$\gamma'_4$     ein vierter vorgebbarer Rücktransformationsfaktor ist.

Bei einem weiteren Ausführungsbeispiel des erfindungsgemäßen Verfahrens ist es zusätzlich vorgesehen, mindestens einen der folgenden Schritte vorzusehen. So erfolgt die Berechnung des ersten Mittelwerts durch

Gleichung 7 $\qquad x_2 = \dfrac{(b'_x + b_x)}{2}$

Gleichung 8 $\qquad y_2 = \dfrac{(b'_y + b_y)}{2}$

wobei $x_2$ eine erste Drehkoordinate um die dritte Achse des zweiten Messkoordinatensystems ist und wobei $y_2$ eine zweite Drehkoordinate um die vierte Achse des zweiten Messkoordinatensystems ist. Die Berechnung des zweiten Mittelwerts erfolgt durch

Gleichung 9 $\qquad x_1 = \dfrac{(a'_x + a_x)}{2}$

Gleichung 10 $\qquad y_1 = \dfrac{(a'_y + a_y)}{2}$

wobei $x_1$ eine erste Drehkoordinate um die erste Achse des ersten Messkoordinatensystems ist, und wobei $y_1$ eine zweite Drehkoordinate um die zweite Achse des ersten Messkoordinatensystems ist.

Bei einem wiederum weiteren Ausführungsbeispiel des erfindungsgemäßen Verfahrens ist es vorgesehen, die vorgebbaren Transformationsfaktoren bzw. vorgebbaren Rücktransformationsfaktoren auf eine bestimmte Art zu ermitteln. Beispielsweise erfolgt dies wie nachfolgend dargestellt:

- Ermitteln des ersten vorgebbaren Transformationsfaktors $\gamma_1$ durch

Gleichung 11 $\qquad \gamma_1 = \dfrac{(a_y \cdot b_y + a_x \cdot b_x)}{(a_x)^2 + (a_y)^2}$

- Ermitteln des zweiten vorgebbaren Transformationsfaktors $\gamma_2$ durch

$$\text{Gleichung 12} \qquad \gamma_2 = \frac{(a_y \cdot b_x - a_x \cdot b_y)}{(a_x)^2 + (a_y)^2}$$

- Ermitteln des dritten vorgebbaren Transformationsfaktors $\gamma_3$ durch

$$\text{Gleichung 13} \qquad \gamma_3 = \frac{(a_x \cdot b_y - a_y \cdot b_x)}{(a_x)^2 + (a_y)^2}$$

- Ermitteln des vierten vorgebbaren Transformationsfaktors $\gamma_4$ durch

$$\text{Gleichung 14} \qquad \gamma_4 = \frac{(a_x \cdot b_x + a_y \cdot b_y)}{(a_x)^2 + (a_y)^2}$$

- Ermitteln des ersten vorgebbaren Rücktransformationsfaktors $\gamma'_1$ durch

$$\text{Gleichung 15} \qquad \gamma'_1 = \frac{(a'_y \cdot b'_y + a'_x \cdot b'_x)}{(a'_x)^2 + (a'_y)^2}$$

- Ermitteln des zweiten vorgebbaren Rücktransformationsfaktors $\gamma'_2$ durch

$$\text{Gleichung 16} \qquad \gamma'_2 = \frac{(a'_x \cdot b'_y - a'_y \cdot b'_x)}{(a'_x)^2 + (a'_y)^2}$$

- Ermitteln des dritten vorgebbaren Rücktransformationsfaktors $\gamma'_3$ durch

$$\text{Gleichung 17} \qquad \gamma'_3 = \frac{(a'_y \cdot b'_x - a'_x \cdot b'_y)}{(a'_x)^2 + (a'_y)^2}$$

- Ermitteln des vierten vorgebbaren Rücktransformationsfaktors $\gamma'_4$ durch

$$\text{Gleichung 18} \qquad \gamma'_4 = \frac{(a'_x \cdot b'_x + a'_y \cdot b'_y)}{(a'_x)^2 + (a'_y)^2}$$

Bei einem wiederum weiteren Ausführungsbeispiel des erfindungsgemäßen Verfahrens ist es zusätzlich oder alternativ vorgesehen, dass die Transformationsfaktoren und Rücktransformationsfaktoren bestimmten Relationen genügen. Bei diesem Ausführungsbeispiel des erfindungsgemäßen Verfahrens gilt mindestens eine der folgenden Gleichungen:

$$\text{Gleichung 19} \qquad \gamma_2 = -\gamma_3$$

$$\text{Gleichung 20} \qquad \gamma'_2 = -\gamma_3$$

$$\text{Gleichung 21} \qquad \gamma'_1 = \gamma_1$$

Gleichung 22 $\qquad \gamma'_4 = \gamma_4$

Gleichung 23 $\qquad \gamma_2 = -\sin(\arccos(\gamma_1))$

Gleichung 24 $\qquad \gamma_1 = \cos(\arcsin(\gamma_2))$

Gleichung 25 $\qquad \gamma'_2 = \sin(\arccos\ (\gamma'_1))$

Gleichung 26 $\qquad \gamma'_1 = \cos(\arcsin(\gamma'_2))$

Bei einem weiteren Ausführungsbeispiel des erfindungsgemäßen Verfahrens ist es zusätzlich vorgesehen, dass das Verfahren mindestens einen der folgenden Schritte aufweist:

- Bearbeiten des ersten Detektorsignals mittels eines ersten Tiefpassfilters und Erzeugen eines ersten gefilterten Detektorsignals;
- Bearbeiten des ersten Detektorsignals mittels eines ersten Tiefpassfilters, der eine Grenzfrequenz von 1 Hz aufweist, und Erzeugen eines ersten gefilterten Detektorsignals;
- Bearbeiten des zweiten Detektorsignals mittels eines zweiten Tiefpassfilters und Erzeugen eines zweiten gefilterten Detektorsignals; oder
- Bearbeiten des zweiten Detektorsignals mittels eines zweiten Tiefpassfilters, der eine Grenzfrequenz von 1 Hz aufweist, und Erzeugen eines zweiten gefilterten Detektorsignals.

Überlegungen haben ergeben, dass das Erzeugen der Transformationsfaktoren und/oder der Rücktransformationsfaktoren mittels der Detektorsignale des ersten Drehwinkeldetektors und des zweiten Drehwinkeldetektors auch zu einem Rauschen der Transformationsfaktoren und/oder der Rücktransformationsfaktoren führen kann. Dies kann eine relative Bewegung der Bilder in dem ersten Gehäuse und dem zweiten Gehäuse zur Folge haben. Um dieses zu vermeiden, sollte das Rauschen der Transformationsfaktoren und/oder der Rücktransformationsfaktoren möglichst gut unterdrückt werden. Hierzu sieht die Erfindung beispielsweise vor, dass die Transformationsfaktoren, die Rücktransformationsfaktoren und/oder die Detektorsignale der einzelnen Drehwinkeldetektoren mit einem Tiefpassfilter gefiltert werden. Der Frequenzbereich, der herausgefiltert wird, sollte dabei deutlich unterhalb der unteren Grenze der Stabilisierungsfrequenzen, aber oberhalb der Häufigkeit einer Veränderung des Augenabstandes sein. Es bietet sich eine untere Grenze von 0,2 Hz und 1 Hz an.

Alternativ oder zusätzlich zur Tiefpassfilterung bietet sich zur Eliminierung des Rauschens auch eine Berechung der Transformationsfaktoren und/oder der Rücktransformationsfaktoren mittels einer Durchschnittsberechnung an. Hierzu werden die Transformationsfaktoren und/oder die Rücktransformationsfaktoren durch mindestens einen der folgenden Schritte ermittelt:

- Ermitteln des ersten vorgebbaren Transformationsfaktors $\gamma_1$ durch

Gleichung 27 $\qquad \gamma_1 = \dfrac{(<a_y> \cdot <b_y> + <a_x> \cdot <b_x>)}{(<a_x>)^2 + (<a_y>)^2}$

- Ermitteln des zweiten vorgebbaren Transformationsfaktors $\gamma_2$ durch

Gleichung 28 $\qquad \gamma_2 = \dfrac{(<a_y> \cdot <b_x> - <a_x> \cdot <b_y>)}{(<a_x>)^2 + (<a_y>)^2}$

- Ermitteln des dritten vorgebbaren Transformationsfaktors $\gamma_3$ durch

Gleichung 29

$$\gamma_3 = \frac{(<a_x> \cdot <b_y> - <a_y> \cdot <b_x>)}{(<a_x>)^2 + (<a_y>)^2}$$

- Ermitteln des vierten vorgebbaren Transformationsfaktors $\gamma_4$ durch

Gleichung 30

$$\gamma_4 = \frac{(<a_x> \cdot <b_x> + <a_y> \cdot <b_y>)}{(<a_x>)^2 + (<a_y>)^2}$$

- Ermitteln des ersten vorgebbaren Rücktransformationsfaktors $\gamma'_1$ durch

Gleichung 31

$$\gamma'_1 = \frac{(<a'_y> \cdot <b'_y> + <a'_x> \cdot <b'_x>)}{(<a'_x>)^2 + (<a'_y>)^2}$$

- Ermitteln des zweiten vorgebbaren Rücktransformationsfaktors $\gamma'_2$ durch

Gleichung 32

$$\gamma'_2 = \frac{(<a'_x> \cdot <b'_y> - <a'_y> \cdot <b'_x>)}{(<a'_x>)^2 + (<a'_y>)^2}$$

- Ermitteln des dritten vorgebbaren Rücktransformationsfaktors $\gamma'_3$ durch

Gleichung 33

$$\gamma'_3 = \frac{(<a'_y> \cdot <b'_x> - <a'_x> \cdot <b'_y>)}{(<a'_x>)^2 + (<a'_y>)^2}$$

- Ermitteln des vierten vorgebbaren Rücktransformationsfaktors $\gamma'_4$ durch

Gleichung 34

$$\gamma'_4 = \frac{(<a'_x> \cdot <b'_x> + <a'_y> \cdot <b'_y>)}{(<a'_x>)^2 + (<a'_y>)^2}$$

wobei

$<a_x>$    ein erstes gefiltertes Teilsignal der Bewegung des optischen Systems relativ zu einer ersten Messachse des ersten Messkoordinatensystems ist;

$<a_y>$    ein zweites gefiltertes Teilsignal der Bewegung des optischen Systems relativ zu einer zweiten Messachse des ersten Messkoordinatensystems ist;

$<b_x>$    ein erstes gefiltertes transformiertes Teilsignal des ersten Teilsignals ist;

$<b_y>$    ein zweites gefiltertes transformiertes Teilsignal des zweiten Teilsignals ist;

$<b'_x>$    ein drittes gefiltertes Teilsignal der Bewegung des optischen Systems relativ zu einer dritten Messachse des zweiten Messkoordinatensystems ist;

$<b'_y>$    ein viertes gefiltertes Teilsignal der Bewegung des optischen Systems relativ zu einer vierten Messachse des zweiten Messkoordinatensystems ist;

$<a'_x>$    ein drittes gefiltertes transformiertes Teilsignal des dritten Teilsignals ist; und wobei

$<a'_y>$    ein viertes gefiltertes transformiertes Teilsignal des vierten Teilsignals ist.

Bei einem weiteren Ausführungsbeispiel ist es alternativ vorgesehen, nicht die gefilterten Teilsignale zu verwenden, sondern von den jeweiligen Teilsignalen einen Mittelwert über einen vorgebbaren Zeitraum zu bestimmen und diesen zur Berechung der Transformationsfaktoren und/oder der Rücktransformationsfaktoren zu verwenden. Bei diesem Ausführungsbeispiel ist $<a_x>$ dann ein erster Mittelwert der ersten Teilsignale der Bewegung des optischen Systems relativ zu der ersten Messachse des ersten Messkoordinatensystems über den vorgebbaren Zeitraum. Entsprechendes gilt dann für die weiteren Variablen.

Bei einem wiederum weiteren Ausführungsbeispiel des erfindungsgemäßen Verfahrens weist das Verfahren zusätzlich oder alternativ mindestens einen der folgenden Schritte auf:

- Bearbeiten von mindestens einem der vorgebbaren Transformationsfaktoren oder vorgebbaren Rücktransformationsfaktoren mittels eines Hochpassfilters und Erzeugen eines Hochpassfiltersignals; oder
- Bearbeiten von mindestens einem der vorgebbaren Transformationsfaktoren oder vorgebbaren Rücktransformationsfaktoren mittels eines Hochpassfilters, der eine Grenzfrequenz von 0,2 Hz aufweist und Erzeugen eines Hochpassfiltersignals.

Dieses Ausführungsbeispiel beruht auf der folgenden Überlegung. Solange der Augenabstand von einem Benutzer nicht verändert wird, bleibt der Relativwinkel zwischen dem ersten Scharnierteil und dem zweiten Scharnierteil konstant. In diesem Falle werden sich die Transformationsfaktoren oder die Rücktransformationsfaktoren (insbesondere die nach den oben genannten Gleichungen berechneten Durchschnittswerte der Transformationsfaktoren und/oder der Rücktransformationsfaktoren) nicht ändern. Wird die Knickbrücke allerdings neu eingestellt, so verändern sich auch die Transformationsfaktoren und/oder die Rücktransformationsfaktoren. Um zu erkennen, ob die Knickbrücke tatsächlich verstellt wird, ist es daher vorgesehen, die Transformationsfaktoren und/oder die Rücktransformationsfaktoren zu beobachten. Sollte eine Veränderung der Transformationsfaktoren und/oder der Rücktransformationsfaktoren festgestellt werden, kann von einer Veränderung bei der Einstellung der Knickbrücke ausgegangen werden. Ob eine Veränderung der Transformationsfaktoren und/oder der Rücktransformationsfaktoren erfolgt, kann beispielsweise durch eine Hochpassfilterung eines oder mehrerer der Transformationsfaktoren und/oder der Rücktransformationsfaktoren erfolgen. Überschreitet der bzw. überschreiten die gefilterte(n) Transformationsfaktoren) und/oder Rücktransformationsfaktoren) einen vorgebbaren Wert, so wird eine Veränderung der Knickbrücke erkannt. Bei einem weiteren Ausführungsbeispiel ist es zusätzlich oder alternativ vorgesehen, dass das Bearbeiten von mindestens einem der vorgebbaren Transformationsfaktoren und vorgebbaren Rücktransformationsfaktoren durch Hochpassfilterung ein Bearbeiten einer Summe von mindestens zwei der vorgebbaren Transformationsfaktoren oder von mindestens zwei der vorgebbaren Rücktransformationsfaktoren umfasst. Wenn eine Veränderung der Transformationsfaktoren und/oder der Rücktransformationsfaktoren festgestellt wird, dann werden die Transformationsfaktoren und/oder die Rücktransformationsfaktoren neu bestimmt, beispielsweise wie bereits weiter oben beschrieben wurde.

Die Erfindung betrifft nach Anspruch 10 auch ein optisches System zur Abbildung eines Objekts zur Durchführung des vorbeschriebenen Verfahrens. Das erfindungsgemäße optische System weist mindestens ein erstes Gehäuse und mindestens ein zweites Gehäuse auf, wobei das erste Gehäuse mit dem zweiten Gehäuse über mindestens eine Knickbrücke verbunden ist. Die Knickbrücke weist ein an dem ersten Gehäuse angeordnetes erstes Scharnierteil auf. Ferner weist die Knickbrücke ein an dem zweiten Gehäuse angeordnetes zweites Scharnierteil auf. Das erste Gehäuse weist mindestens ein erstes Objektiv auf. Ferner ist das zweite Gehäuse mit mindestens einem zweiten Objektiv versehen. Das erste Gehäuse weist mindestens einen ersten Drehwinkeldetektor zur Messung einer Bewegung des optischen Systems auf. Ferner ist das erste Gehäuse mit mindestens einer ersten Bildstabilisierungseinheit versehen. Das zweite Gehäuse ist mit mindestens einer zweiten Bildstabilisierungseinheit versehen. Das zweite Gehäuse weist mindestens einen zweiten Drehwinkeldetektor zur Messung einer Bewegung des optischen Systems auf. An dem optischen System ist mindestens eine Steuereinheit angeordnet, die mit der ersten Bildstabilisierungseinheit zur Steuerung einer Bewegung der ersten Bildstabilisierungseinheit und/oder die mit der zweiten Bildstabilisierungseinheit zur Steuerung einer Bewegung der zweiten Bildstabilisierungseinheit verbunden ist. Insbesondere ist es vorgesehen, dass das erfindungsgemäße optische System mindestens einen Tiefpassfilter und/oder mindestens einen Hochpassfilter aufweist. Es ist vorgesehen, dass die Steuerungseinheit eine Speichereinheit aufweist, in der ein Programmcode ladbar ist, der bei Ausführung in einem Prozessor der Steuereinheit das oben beschriebene Verfahren mit mindestens einem der vorgenannten Merkmale oder mit einer Kombination von mindestens zwei der vorgenannten Merkmale ausführt.

Die Erfindung wird nun anhand von Ausführungsbeispielen mittels Figuren näher erläutert. Dabei zeigen

Fig. 1A    eine erste schematische Darstellung eines optisches Systems in Form eines Fernglases mit einer Knickbrücke;

Fig. 1B    eine zweite schematische Darstellung des Fernglases nach Figur 1A;

Fig. 2A    eine schematische Darstellung eines ersten optischen Teilsystems;

Fig. 2B    eine dritte schematische Darstellung des Fernglases nach Figur 1A;

Fig. 2C    eine erste Schnittdarstellung des Fernglases entlang der Linie AA gemäß Figur 2B;

Fig. 2D    eine zweite Schnittdarstellung des Fernglases entlang der Linie A-A gemäß Figur 2B;

Fig. 2E    eine vergrößerte Schnittdarstellung auf eine Bildstabilisierungseinheit des Fernglases gemäß den Figuren 2C und 2D;

Fig. 3        eine schematische Darstellung eines ersten Blockschaltbilds von Einheiten des Fernglases;

Fig. 4        eine schematische Darstellung eines zweiten Blockschaltbilds von Einheiten des Fernglases ;

Fig. 5        eine schematische Darstellung eines dritten Blockschaltbilds von Einheiten des Fernglases;

Fig. 6        eine schematische Darstellung eines vierten Blockschaltbilds von Einheiten des Fernglases; und

Fig. 7        eine schematische Darstellung eines fünften Blockschaltbilds von Einheiten des Fernglases.

Die Erfindung wird nachfolgend anhand eines optischen Systems in Form eines binokularen Fernglases 1 besprochen (nachfolgend nur Fernglas genannt). Es wird aber explizit darauf hingewiesen, dass die Erfindung nicht auf ein binokulares Fernglas eingeschränkt ist. Vielmehr ist die Erfindung für jedes optische System geeignet.

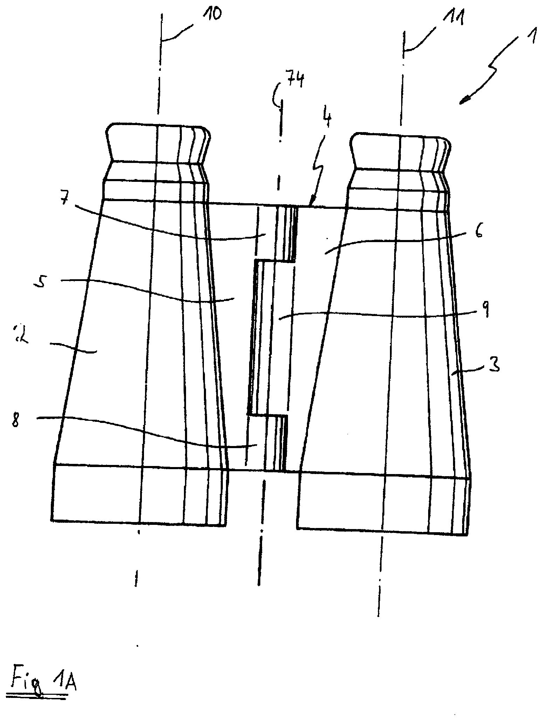

**Figur 1A** zeigt eine erste schematische Darstellung des Fernglases 1, welches ein tubusförmiges erstes Gehäuseteil 2 und ein tubusförmiges zweites Gehäuseteil 3 aufweist. Durch das erste Gehäuseteil 2 verläuft eine erste optische Achse 10. Hingegen verläuft durch das zweite Gehäuseteil 3 eine zweite optische Achse 11. Das erste Gehäuseteil 2 ist mit dem zweiten Gehäuseteil 3 über eine Knickbrücke 4 verbunden. Die Knickbrücke 4 weist ein erstes Scharnierteil 5 auf, welches an dem ersten Gehäuseteil 2 angeformt ist. Ferner weist die Knickbrücke 4 ein zweites Scharnierteil 6 auf, welches an dem zweiten Gehäuseteil 3 angeordnet ist. Das erste Scharnierteil 5 weist ein erstes Aufnahmeteil 7 und ein zweites Aufnahmeteil 8 auf, zwischen denen ein drittes Aufnahmeteil 9 des zweiten Scharnierteils 6 angeordnet ist. Durch das erste Aufnahmeteil 7, das zweite Aufnahmeteil 8 sowie das dritte Aufnahmeteil 9 verläuft ein Achsbolzen (nicht dargestellt), sodass die relative Position des ersten Gehäuseteils 2 und des zweiten Gehäuseteils 3 um eine Gelenkachse 74 zueinander eingestellt werden kann. Auf diese Weise ist es möglich, das erste Gehäuseteil 2 und das zweite Gehäuseteil 3 auf die Pupillendistanz eines Benutzers einzustellen, sodass zum einen das erste Gehäuseteil 2 an dem einen der beiden Augen des Benutzers angeordnet ist und so dass zum anderen das zweite Gehäuseteil 3 an dem anderen der beiden Augen des Benutzers angeordnet ist.

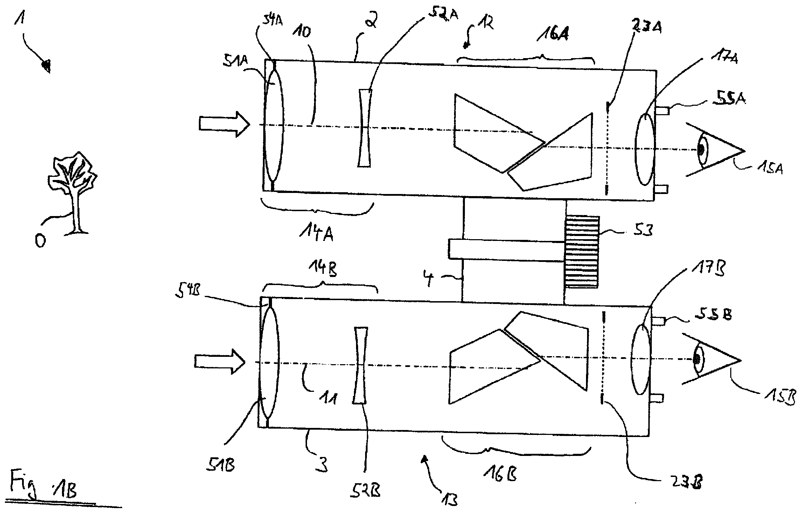

**Figur 1B** zeigt eine weitere Darstellung des Fernglases 1. Das erste Gehäuseteil 2 weist ein erstes optisches Teilsystem 12 auf. Das erste optische Teilsystem 12 ist mit einem ersten Objektiv 14A, mit einer als erstes Prismensystem ausgebildeten ersten Bildstabilisierungseinheit 16A und einem ersten Okular 17A versehen. An dem ersten Okular 17A kann ein erstes Auge 15A eines Benutzers zur Beobachtung eines Objekts O angeordnet werden. Die erste optische Achse 10 des ersten optischen Teilsystems 12 wird aufgrund des ersten Prismensystems 16A (erste Bildstabilisierungseinheit 16A) lateral etwas versetzt, so dass es zu einer stufigen Ausbildung der ersten optischen Achse 10 kommt.

Das erste Objektiv 14A besteht bei diesem Ausführungsbeispiel aus einer ersten Fronteinheit 51A und einer ersten Fokussiereinheit 52A. Weitere Ausführungsformen des ersten Objektivs 14A sehen eine unterschiedliche Anzahl an einzelnen Linsen oder aus Linsen bestehenden Kittgliedern vor. Zum Zwecke einer Fokussierung des durch Fernglas 1 betrachteten Objekts O kann entweder das erste Okular 17A oder die erste Fokussiereinheit 52A axial entlang der ersten optischen Achse 10 verschoben werden. Bei einer weiteren Ausführungsform wird die erste Fronteinheit 51A oder sogar das vollständige erste Objektiv 14A entlang der ersten optischen Achse 10 verschoben. Bei einer weiteren Ausführungsform werden die erste Fronteinheit 51A und die erste Fokussiereinheit 52A relativ zueinander verschoben.

Das zweite Gehäuseteil 3 weist ein zweites optisches Teilsystem 13 auf. Das zweite optische Teilsystem 13 ist mit einem zweiten Objektiv 14B, mit einer als Prismensystem ausgebildeten zweiten Bildstabilisierungseinheit 16B und mit einem zweiten Okular 17B versehen. An dem zweiten Okular 17B kann ein zweites Auge 15B des Benutzers zur Beobachtung des Objekts O angeordnet werden. Die zweite optische Achse 11 des zweiten optischen Teilsystems 13 wird aufgrund der zweiten Bildstabilisierungseinheit 16B (Prismensystem) lateral etwas versetzt, so dass es zu einer stufigen Ausbildung der zweiten optischen Achse 11 kommt.

Das zweite Objektiv 14B besteht bei diesem Ausführungsbeispiel aus einer zweiten Fronteinheit 51B und einer zweiten Fokussiereinheit 52B. Weitere Ausführungsformen des zweiten Objektivs 14B sehen eine unterschiedliche Anzahl an einzelnen Linsen oder aus Linsen bestehenden Kittgliedern vor. Zum Zwecke einer Fokussierung des durch Fernglas 1 betrachteten Objekts O kann entweder das zweite Okular 17B oder die zweite Fokussiereinheit 52B axial entlang der zweiten optischen Achse 11 verschoben werden. Bei einer weiteren Ausführungsform wird die zweite Fronteinheit 51B oder sogar das vollständige zweite Objektiv 14B entlang der zweiten optischen Achse 11 verschoben. Bei einer weiteren Ausführungsform werden die zweite Fronteinheit 51B und die zweite Fokussiereinheit 52B relativ zueinander verschoben.

Bei beiden oben dargestellten optischen Teilsystemen 12,13 ist die Strahlrichtung des in die optischen Teilsysteme 12, 13 einfallende Lichtstrahlen wie folgt: Objekt O - Objektiv 14A, 14B- Bildstabilisierungseinheit (Prismensystem) 16A, 16B - Okular 17A, 17B - Auge 15A, 15B.

Zum Fokussieren ist bei dem hier dargestellten Ausführungsbeispiel an der Knickbrücke 4 ein Drehknopf 53 angeordnet, mit dem die erste Fokussiereinheit 52A und die zweite Fokussiereinheit 52B gemeinsam entlang der beiden optischen Achsen 10 und 11 verschoben werden können. Bei einer weiteren Ausführungsform ist es vorgesehen, das erste Objektiv 14A und das zweite Objektiv 14B (oder zumindest Einheiten des ersten Objektivs 14A und des zweiten Objektivs 14B) relativ zueinander zu verstellen.

Sowohl das erste Objektiv 14A als auch das zweite Objektiv 14B erzeugen bei dem hier dargestellten Ausführungsbeispiel ein reales, relativ zum betrachteten Objekt O auf dem Kopf stehendes Bild in einer dem jeweiligen Objektiv 14A, 14B zugeordneten Bildebene. Das dem ersten Objektiv 14A zugeordnete erste Prismensystem 16A (erste Bildstabilisierungseinheit) sowie das dem zweiten Objektiv 14B zugeordnete zweite Prismensystem 16B (zweite Bildstabilisierungseinheit) werden zur Bildaufrichtung verwendet. Somit wird das auf dem Kopf stehende Bild wieder aufgerichtet und in einer neuen Bildebene, der linken Zwischenbildebene 23A oder der rechten Zwischenbildebene 23B, abgebildet. Das erste Prismensystem 16A (erste Bildstabilisierungseinheit) und das zweite Prismensystem 16B (zweite Bildstabilisierungseinheit) können als Abbe-König-Prismensystem, Schmidt-Pechan-Prismensystem, Uppendahl-Prismensystem, Porro-Prismensystem oder einer anderen Prismensystem-Variante aufgebaut sein.

In der linken Zwischenbildebene 23A ist beispielsweise eine das Sehfeld scharf begrenzende erste Feldblende angeordnet. Ferner kann beispielsweise in der rechten Zwischenbildebene 23B eine das Sehfeld scharf begrenzende zweite Feldblende angeordnet sein.

Das erste Okular 17A wird verwendet, um das Bild der linken Zwischenbildebene 23A in eine beliebige Entfernung, z.B. ins Unendliche oder in eine andere Entfernung, abzubilden. Ferner wird das zweite Okular 17B dazu verwendet, um das Bild der rechten Zwischenbildebene 23B in eine beliebige Entfernung, z.B. ins Unendliche oder in eine andere Entfernung, abzubilden.

Die erste Aperturblende 54A des ersten optischen Teilsystems 12 und die zweite Aperturblende 54B des zweiten optischen Teilsystems 13 können entweder durch eine Fassung eines optischen Elements des entsprechenden optischen Teilsystems 12, 13, in der Regel durch die Fassung der Linsen der ersten Fronteinheit 51A oder der zweiten Fronteinheit 51B, oder durch eine separate Blende gebildet sein. Sie kann in Strahlrichtung durch das entsprechende optische Teilsystem 12 oder 13 in eine Ebene abgebildet werden, die in Strahlrichtung hinter dem entsprechenden Okular 17A oder 17B liegt und typischerweise 5 bis 25 mm Abstand zu diesem hat. Diese Ebene wird Ebene der Austrittspupille genannt.

Zum Schutz des Benutzers vor seitlich einfallendem Licht können an dem ersten Okular 17A eine ausziehbare, ausdrehbare oder umklappbare erste Augenmuschel 55A und an dem zweiten Okular 17B eine ausziehbare, ausdrehbare oder umklappbare zweite Augenmuschel 55B vorgesehen sein.

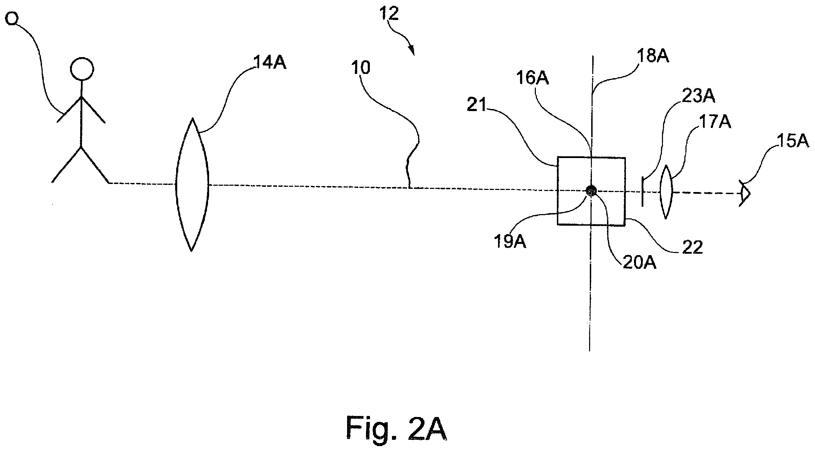

**Figur 2A** zeigt eine schematische Darstellung des ersten optischen Teilsystems 12, das in dem ersten Gehäuseteil 2 angeordnet ist. Das in dem zweiten Gehäuseteil 3 angeordnete zweite optische Teilsystem 13 weist einen identischen Aufbau wie das erste optische Teilsystem 12 auf. Somit gelten die nachfolgenden Ausführungen hinsichtlich des ersten optischen Teilsystems 12 auch für das zweite optische Teilsystem 13.

Wie aus **Figur 2A** ersichtlich, sind entlang der ersten optischen Achse 10 von dem Objekt O in Richtung des ersten Auges 15A des Benutzers das erstes Objektiv 14A, die erste Bildstabilisierungseinheit 16A sowie das erste Okular 17A angeordnet. Bei dem hier dargestellten Ausführungsbeispiel ist die erste Bildstabilisierungseinheit 16A als Prismenumkehrsystem ausgebildet. Alternativ hierzu ist es bei einem weiteren Ausführungsbeispiel vorgesehen, dass die erste Bildstabilisierungseinheit 16A als Linsenumkehrsystem ausgebildet ist. Wie oben genannt, weist das zweite optische Teilsystem 13 einen identischen Aufbau wie das erste optische Teilsystem 12 auf. So ist hier das zweite Prismensystem als zweite Bildstabilisierungseinheit 16B ausgebildet.

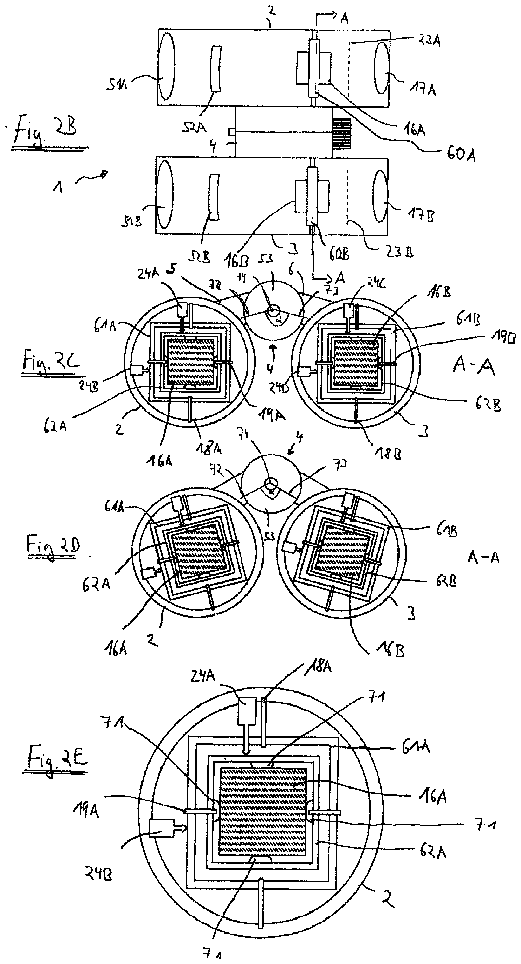

**Figur 2B** zeigt eine weitere schematische Darstellung des Fernglases 1. **Figur 2B** beruht auf der **Figur 1B.** Gleiche Bauteile sind mit gleichen Bezugszeichen versehen. **Figur 2B** zeigt nun auch die Bewegungsvorrichtungen für die erste Bildstabilisierungseinheit 16A und die zweite Bildstabilisierungseinheit 16B. Die erste Bildstabilisierungseinheit 16A ist in einer ersten Kardanik 60A angeordnet. Die zweite Bildstabilisierungseinheit 16B ist in einer zweiten Kardanik 60B angeordnet.

Die Anordnung der beiden Bildstabilisierungseinheiten 16A und 16B ist in der **Figur 2C** detaillierter dargestellt. Die erste Kardanik 60A weist eine erste äußere Aufhängung 61A auf, die über eine erste Achse 18A an dem ersten Gehäuseteil 2 angeordnet ist. Die erste äußere Aufhängung 61A ist drehbar um die erste Achse 18A angeordnet. Ferner weist die erste Kardanik 60A eine erste innere Aufhängung 62A auf, die über eine zweite Achse 19A an der ersten äußeren Aufhängung 61A drehbar angeordnet ist. Über eine erste Antriebseinheit 24A wird die erste innere Aufhängung 62A um die zweite Achse 19A gedreht. Ferner ist eine zweite Antriebseinheit 24B vorgesehen, mittels welcher die erste äußere Aufhängung 61A um die erste Achse 18A gedreht wird. **Figur 2E** zeigt das Vorgenannte in einer vergrößerten Darstellung. Die erste Bildstabilisierungseinheit 16A wird mittels Klemmhalter 71 an der ersten inneren Aufhängung 62A gehalten.

Die zweite Bildstabilisierungseinheit 16B ist an der zweiten Kardanik 60B angeordnet. Die zweite Kardanik 60B weist eine zweite äußere Aufhängung 61B auf, die über eine dritte Achse 18B an dem zweiten Gehäuseteil 3 angeordnet ist. Die zweite äußere Aufhängung 61B ist drehbar um die dritte Achse 18B angeordnet. Ferner weist die zweite Kardanik 60B eine zweite innere Aufhängung 62B auf, die über eine vierte Achse 19B an der zweiten äußeren Aufhängung 61B drehbar angeordnet ist. Über eine dritte Antriebseinheit 24C wird die zweite innere Aufhängung 62B um die dritte Achse 19B gedreht. Ferner ist eine vierte Antriebseinheit 24D vorgesehen, mittels welcher die zweite äußere Aufhängung 61B um die dritte Achse 18B gedreht wird.

Wie oben erwähnt, zeigt **Figur 2A** das erste optische Teilsystem 12. Die erste Bildstabilisierungseinheit 16A ist mittels der ersten Kardanik 60A derart angeordnet, dass sie um zwei zueinander rechtwinklig angeordnete Achsen drehbar gelagert ist, nämlich um die erste Achse 18A und um die zweite Achse 19A, welche in die Blattebene hineinragt. Die erste Achse 18A und die zweite Achse 19A schneiden sich in einem ersten Schnittpunkt 20A. Der erste Schnittpunkt 20A ist unterschiedlich zu einem ersten optisch neutralen Punkt auf der ersten optischen Achse 10 angeordnet. Hierzu wird auf die bereits weiter oben gemachten Ausführungen verwiesen.

Die erste Bildstabilisierungseinheit 16A weist eine erste Eintrittsfläche 21 und eine erste Austrittsfläche 22 auf. Die erste Austrittsfläche 22 ist in einem Bereich von 1 mm bis 20 mm beabstandet zur linken Zwischenbildebene 23A angeordnet. Beispielsweise ist die erste Austrittsfläche 22 in einem Bereich von 2 mm bis 15 mm beabstandet zur linken Zwischenbildebene 23A angeordnet. Alternativ hierzu ist vorgesehen, dass die erste Austrittsfläche 22 in einem Bereich von 3 mm bis 12 mm beabstandet zur linken Zwischenbildebene 23A angeordnet ist.

Wie oben bereits erwähnt, gelten die vorstehend und nachstehend aufgeführten Anmerkungen hinsichtlich des ersten optischen Teilsystems 12 für das zweite optische Teilsystem 13 entsprechend.

Mit der vorgenannten Anordnung der ersten Austrittsfläche 22 der ersten Bildstabilisierungseinheit 16A zur linken Zwischenbildebene 23A wird zum einen erzielt, dass die Qualität des Bildes, welches durch das erste optische Teilsystem 12 erzeugt wird, verbessert wird, da Fertigungstoleranzen, die bei der Herstellung der ersten Bildstabilisierungseinheit 16A in Kauf genommen werden müssen, sich im erzeugten Bild nicht mehr stark auswirken. Zum anderen wird erzielt, dass aufgrund des Strahlenverlaufs die Ausdehnung und das Volumen der ersten Bildstabilisierungseinheit 16A im Vergleich zum Stand der Technik kleiner ausfallen können. Dies bedeutet, dass die Masse der ersten Bildstabilisierungseinheit 16A geringer als bei dem Stand der Technik sein kann. Auf diese Weise wird das Trägheitsmoment der ersten Bildstabilisierungseinheit 16A derart verringert, dass man mit einer relativ geringen Kraft die Verstellung der ersten Bildstabilisierungseinheit 16A bewirken kann. Das geringere Volumen, die geringere Ausdehnung sowie die Möglichkeit, Antriebseinheiten zu verwenden, die eine geringe Kraft zur Verstellung der ersten Bildstabilisierungseinheit 16A zur Verfügung stellen, ermöglichen, dass das erste Gehäuseteil 2 kleiner als die im Stand der Technik verwendeten Gehäuseteile ausgebildet werden kann. Somit wird ein formschönes, den Benutzer an ein normales Fernglas erinnerndes Gehäuse bereitgestellt, das einen ästhetisch schöneren Eindruck als der bekannte Stand der Technik erweckt. Es wird auch die Ausbildung des Fernglases 1 in zwei Tuben (nämlich einem dem ersten Gehäuseteil 2 entsprechenden ersten Tubus und einem dem zweiten Gehäuseteil 3 entsprechenden zweiten Tubus) ermöglicht, was der für einen Nutzer gewohnten Aufteilung eines Fernglases entspricht und was die Einstellung der Pupillendistanz wesentlich vereinfacht. Ferner ermöglicht die Verwendung von zwei Bildstabilisierungseinheiten (nämlich die erste Bildstabilisierungseinheit 16A im ersten Gehäuseteil 2 und die zweite Bildstabilisierungseinheit 16B im zweiten Gehäuseteil 3) eine im Vergleich zum Stand der Technik deutliche Reduktion des Trägheitsmoments der beiden Bildstabilisierungseinheiten, so dass Piezo-Aktoren zum Einsatz kommen können.

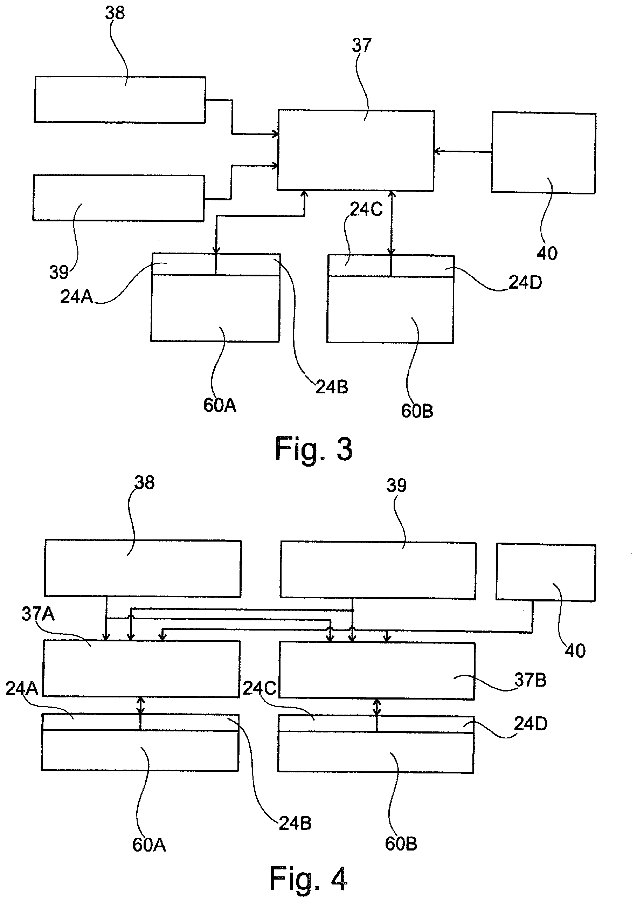

**Figur 3** zeigt eine schematische Darstellung eines Blockschaltbildes von Einheiten für eine Bildstabilisierung im optischen System in Form des Fernglases 1. Die erste Kardanik 60A der ersten Bildstabilisierungseinheit 16A, die erste Antriebseinheit 24A und die zweite Antriebseinheit 24B, welche im ersten Gehäuseteil 2 angeordnet sind, zum einen sowie die zweite Kardanik 60B der zweiten Bildstabilisierungseinheit 16B, die dritte Antriebseinheit 24C und die vierte Antriebseinheit 24D, die im zweiten Gehäuseteil 3 angeordnet sind, zum anderen sind mit einer Steuer- und Kontrolleinheit 37 verbunden (beispielsweise ein Mikrocontroller). Die Steuer- und Kontrolleinheit 37 ist wiederum mit einem ersten Winkelgeschwindigkeitsdetektor 38 und mit einem zweiten Winkelgeschwindigkeitsdetektor 39 verbunden. Der erste Winkelgeschwindigkeitsdetektor 38 dient der Detektion von Bewegungen des Fernglases 1 und ist im ersten Gehäuseteil 2 angeordnet. Auch der zweite Winkelgeschwindigkeitsdetektor 39 dient der Detektion von Bewegungen des Fernglases 1 und ist im ersten Gehäuseteil 2 angeordnet. Bei den vorgenannten Bewegungen handelt es sich beispielsweise um rotatorische und/oder translatorische Zitterbewegungen. Mittels der Winkelgeschwindigkeitsdetektoren wird der Drehwinkel berechnet, welcher durch eine Winkelgeschwindigkeit und einen vorgebbaren Zeitraum bestimmbar ist. Die Erfindung ist aber nicht auf derartige Detektoren eingeschränkt. Vielmehr ist jeder geeignete Detektor zur Bestimmung des Drehwinkels (Drehwinkeldetektor) verwendbar. Darüber hinaus ist die Steuer- und Kontrolleinheit 37 mit einem Knickbrückensensor 40 verbunden. Die Verwendung des Knickbrückensensors 40 hat folgenden Hintergrund. Die relative Lage der Drehachsen (nämlich zum einen die erste Achse 18A sowie die zweite Achse 19A der ersten Bildstabilisierungseinheit 16A und zum anderen die dritte Achse 18B sowie die vierte Achse 19B der zweiten Bildstabilisierungseinheit 16B) ändert sich bei Einstellung der Pupillendistanz über die Knickbrücke 4. Um eine genaue Einstellung der Drehbewegung der ersten Bildstabilisierungseinheit 16A relativ zu der zweiten Bildstabilisierungseinheit 16B zur Bildstabilisierung durch Positionieren der ersten Bildstabilisierungseinheit 16A und der zweiten Bildstabilisierungseinheit 16B erzielen zu können, ist es wünschenswert, die genaue relative Lage der jeweiligen Drehachsen zu kennen. Der Knickbrückensensor 40 ermittelt nun einen Relativwinkel $\alpha$ zwischen einer ersten Scharnierteilachse 72 des ersten Scharnierteils 5 und einer zweiten Scharnierteilachse 73 des zweiten Scharnierteils 6, wobei die erste Scharnierteilachse 72 und die zweite Scharnierteilachse 73 einen gemeinsamen Schnittpunkt mit der Gelenkachse 74 aufweisen (vgl. **Figuren 2C und 2D).**

Dabei ist es beispielsweise vorgesehen, mittels des Knickbrückensensors 40 den tatsächlichen Knickwinkel $a_k$ zu bestimmen, was nachfolgend erläutert wird. Beispielsweise kann der Relativwinkel $\alpha$ in der **Figur 2C,** in welcher die erste Achse 18A und die dritte Achse 18B parallel zueinander angeordnet sind, bereits 175° betragen. In der **Figur 2D** ist nun eine Ausrichtung der ersten Scharnierteilachse 72 und der zweiten Scharnierteilachse 73 dargestellt, in welcher der Relativwinkel $\alpha$ beispielsweise 145° beträgt. Dann ist der tatsächliche Knickwinkel $\alpha_k$ hinsichtlich der ersten Achse 18A und der dritten Achse 18B die Differenz der beiden gemessenen Relativwinkel, also 30°. Der auf diese oder ähnliche Weise ermittelte Knickwinkel ermöglicht nun eine Transformation von Koordinaten eines ersten Koordinatensystems von Baueinheiten des ersten Gehäuseteils 2 in Koordinaten eines zweiten Koordinatensystems von Baueinheiten des zweiten Gehäuseteils 3.

Die Einstellung der Position (Drehposition) der ersten Bildstabilisierungseinheit 16A und der Position (Drehposition) der zweiten Bildstabilisierungseinheit 16B erfolgt beispielsweise wie nachfolgend geschildert. Mittels des ersten Winkelgeschwindigkeitsdetektors 38 und des zweiten Winkelgeschwindigkeitsdetektors 39 wird eine Winkelgeschwindigkeit aufgrund einer Bewegung des Fernglases 1 relativ zur beobachteten Umgebung detektiert. Der erste Winkelgeschwindigkeitsdetektor 38 und der zweite Winkelgeschwindigkeitsdetektor 39 liefern von der Bewegung abhängige Winkelgeschwindigkeitssignale. Mit den Winkelgeschwindigkeitssignalen werden in der Steuer-und Kontrolleinheit 37 Drehwinkel um die Messachsen des ersten Winkelgeschwindigkeitsdetektors 38 sowie Drehwinkel um die Messachsen des zweiten Winkelgeschwindigkeitsdetektors 39 ermittelt. Die auf diese Weise ermittelten Drehwinkel werden nun in einen ersten (Verstell-) Winkel umgerechnet, um welchen die erste Bildstabilisierungseinheit 16A gedreht werden muss, um im Raum positioniert zu werden. Ferner wird mit den Drehwinkeln ein zweiter (Verstell-) Winkel berechnet, um welcher die zweite Bildstabilisierungseinheit 16B gedreht werden muss, um im Raum "festgesetzt" zu werden. Ferner sollte beachtet werden, dass der Schnittpunkt der Drehachsen mit dem optisch neutralen Punkt des Fernglases 1 nicht übereinstimmt. Dies bedeutet beispielsweise für das erste optische Teilsystem 12 in dem ersten Gehäuseteil 2, dass der erste Schnittpunkt 20A der ersten Achse 18A und der zweiten Achse 19A nicht mit dem optisch neutralen Punkt des Fernglases 1 auf der ersten optischen Achse 10 übereinstimmt. Daher sollte der ermittelte Drehwinkel mit einem vom Fernglas 1 abhängigen Faktor multipliziert werden, um den notwendigen (Verstell-) Winkel zu erhalten. Dabei sollte die relative Lage von Messachsen der beiden Winkelgeschwindigkeitsdetektoren 38 und 39 sowie der Drehachsen der ersten Bildstabilisierungseinheit 16A sowie der zweiten Bildstabilisierungseinheit 16B beachtet werden. Durch eine geeignete Transformation unter Berücksichtigung des Knickwinkels erhält man den entsprechenden (Verstell-) Winkel. Beispielsweise ist es vorgesehen, dass die Lage der Messachsen der beiden Winkelgeschwindigkeitsdetektoren 38 und 39 der Lage der ersten Achse 18A sowie der zweiten Achse 19A der ersten Bildstabilisierungseinheit 16A entspricht. Mittels des ermittelten Knickwinkels $\alpha_k$ können dann die (Verstell-) Winkel der ersten Bildstabilisierungseinheit 16A in (Verstell-) Winkel der zweiten Bildstabilisierungseinheit 16B transformiert werden. Mit anderen Worten ausgedrückt, werden nun erste Drehkoordinaten eines ersten Koordinatensystems des ersten Gehäuseteils 2 (wobei die ersten Drehkoordinaten für die erste Bildstabilisierungseinheit 16A vorgesehen sind) in zweite Drehkoordinaten eines zweiten Koordinatensystems des zweiten Gehäuseteils 3 (wobei die zweiten Drehkoordinaten für die zweite Bildstabilisierungseinheit 16B vorgesehen sind) transformiert. Das zweite Koordinatensystem basiert beispielsweise auf der dritten Achse 18B sowie der vierten Achse 19B der zweiten Bildstabilisierungseinheit 16B. Die Berechnung erfolgt durch die Steuer- und Kontrolleinheit 37.

Im Grunde genommen handelt es sich um eine Transformation der Koordinaten der ersten Messachse sowie der zweiten Messachse der beiden Winkelgeschwindigkeitsdetektoren 38 und 39 in die Koordinaten der dritten Achse 18B sowie der vierten Achse 19B der zweiten Bildstabilisierungseinheit 16B. Hinsichtlich der ersten Bildstabilisierungseinheit 16A braucht eine derartige Transformation nicht zu erfolgen. Hierzu wird ebenfalls auf weiter oben verwiesen.

Wie oben erwähnt, sind der erste Winkelgeschwindigkeitsdetektor 38 und der zweite Winkelgeschwindigkeitsdetektor 39 in dem ersten Gehäuseteil 2 angeordnet (n = 2). Bei der hier dargestellten Ausführungsform ist es vorgesehen, dass die Bewegung des Fernglases 1 durch Bestimmen einer Drehung des Fernglases 1 zu jeweils der ersten Messachse und zu jeweils der zweiten Messachse eines jeden der beiden Winkelgeschwindigkeitsdetektoren 38 und 39 bestimmt wird. Ferner wird ein erster Mittelwert der Drehungen um die ersten Messachsen und ein zweiter Mittelwert der Drehungen um die zweiten Messachsen bestimmt. Die beiden Mittelwerte werden nun zur Bestimmung der zweiten Drehkoordinaten für die zweite Bildstabilisierungseinheit 16B herangezogen. Wie oben erläutert, verringert die Anzahl von mehreren Winkelgeschwindigkeitsdetektoren (Drehwinkeldetektoren) das Rauschen.

Die **Figur 4** ist ein Blockschaltbild einer weiteren Ausführungsform von Einheiten zur Bildstabilisierung, welche auf dem Ausführungsbeispiel der **Figur 3** basiert. Gleiche Baueinheiten sind daher mit gleichen Bezugszeichen versehen. Im Unterschied zur Ausführungsform gemäß der **Figur 3** weist die Ausführungsform gemäß der **Figur 4** zwei Steuer- und Kontrolleinheiten auf, nämlich eine erste Steuer- und Kontrolleinheit 37A und eine zweite Steuer- und Kontrolleinheit 37B. Die erste Steuer- und Kontrolleinheit 37A ist mit dem ersten Winkelgeschwindigkeitsdetektor 38, mit der ersten Kardanik 60A der ersten Bildstabilisierungseinheit 16A, mit der ersten Antriebseinheit 24A und mit der zweiten Antriebseinheit 24B verbunden. Die erste Steuer- und Kontrolleinheit 37A ist beispielsweise in dem ersten Gehäuseteil 2 angeordnet. Die zweite Steuer-und Kontrolleinheit 37B ist mit dem zweiten Winkelgeschwindigkeitsdetektor 39, mit der zweiten Kardanik 60B der Bildstabilisierungseinheit 16B, mit der dritten Antriebseinheit 24C und mit der vierten Antriebseinheit 24D verbunden. Die zweite Steuer- und Kontrolleinheit 37B ist beispielsweise in dem zweiten Gehäuseteil 3 angeordnet. Der Knickbrückensensor 40 ist sowohl mit der ersten Steuer- und Kontrolleinheit 37A als auch mit der zweiten Steuer- und Kontrolleinheit 37B verbunden. Darüber hinaus ist der erste Winkelgeschwindigkeitsdetektor 38 mit der zweiten Steuer- und Kontrolleinheit 37B verbunden. Ferner ist der zweite Winkelgeschwindigkeitsdetektor 39 mit der ersten Steuer- und Kontrolleinheit 37A verbunden. Dieses Ausführungsbeispiel verwendet demnach jeweils eine separate Steuer- und Kontrolleinheit zum einen für das erste optische Teilsystem 12 in dem ersten Gehäuseteil 2 und zum anderen für das zweite optische Teilsystem 13 in dem zweiten Gehäuseteil 3, wobei allerdings die Winkelgeschwindigkeitsdetektoren 38, 39 zur Detektion von Bewegungen des Fernglases 1 gemeinsam genutzt werden, beispielsweise wie vorstehend und nachstehend beschrieben.

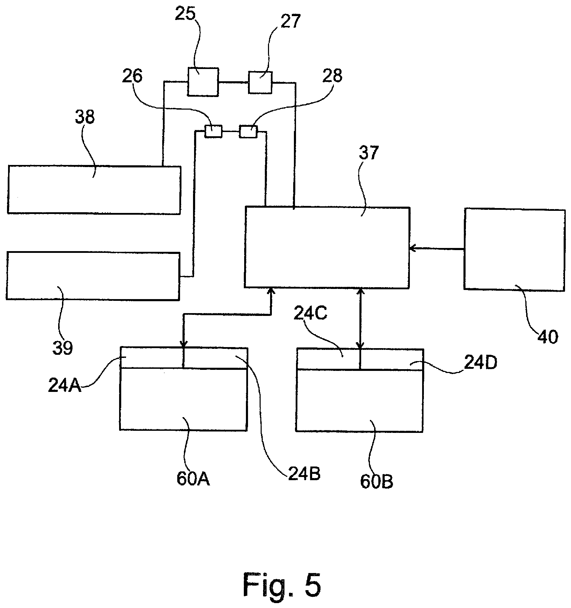

Die **Figur 5** ist ein Blockschaltbild einer weiteren Ausführungsform von Einheiten zur Bildstabilisierung, das auf dem Ausführungsbeispiel der **Figur 3** basiert. Gleiche Baueinheiten sind daher mit gleichen Bezugszeichen versehen. Im Unterschied zur Ausführungsform gemäß der **Figur 3** weist die Ausführungsform gemäß der **Figur 5** einen ersten Tiefpassfilter 25 und einen ersten Hochpassfilter 27 auf, mit denen die Detektorsignale des ersten Winkelgeschwindigkeitsdetektors 38 gefiltert werden. Ferner sind ein zweiter Tiefpassfilter 26 und ein zweiter Hochpassfilter 28 vorgesehen, mit welchen die Detektorsignale des zweiten Winkelgeschwindigkeitsdetektors 39 gefiltert werden. Die gefilterten Detektorsignale werden der Steuer- und Kontrolleinheit 37 zugeführt. Die beiden Winkelgeschwindigkeitsdetektoren 38 und 39 weisen einen Rauschanteil auf, welcher das Bild beeinflusst. Dieses ist unerwünscht. Zur Reduktion eines derartigen Rauschens wird die Bandbreite der Detektorsignale der beiden Winkelgeschwindigkeitsdetektoren 38 und 39 verkleinert. Das Rauschen außerhalb dieser Bandbreite (Frequenzbereich) wird unterdrückt. Dies erfolgt durch Filterung der Detektorsignale mittels der beiden oben genannten Hochpassfilter 27, 28 und der beiden oben genannten Tiefpassfilter 25, 26. Somit tritt ein Rauschen mit Frequenzen oberhalb und unterhalb des Frequenzbereichs nicht mehr auf. Die Verwendung der vorgenannten Rauschunterdrückung ist vorteilhaft, da Zitterbewegungen im Bild nur bis zu einer Frequenz von etwa 20 Hz sichtbar sind. Bewegungen, die eine Bewegungsfrequenz oberhalb von 20 Hz aufweisen, führen nur zu einer Unschärfe der Abbildung, da sie oberhalb einer Frequenz liegen, die das menschliche Auge als Bewegung erkennen kann. Bei Bewegungen unterhalb einer Frequenz von 0,5 Hz treten recht wenige unwillkürliche Zitterbewegungen auf, jedoch vermehrt die willkürliche Bewegung des Anwenders. Es wird daher beispielsweise ein Frequenzbereich von 0,5 Hz bis 20 Hz verwendet.

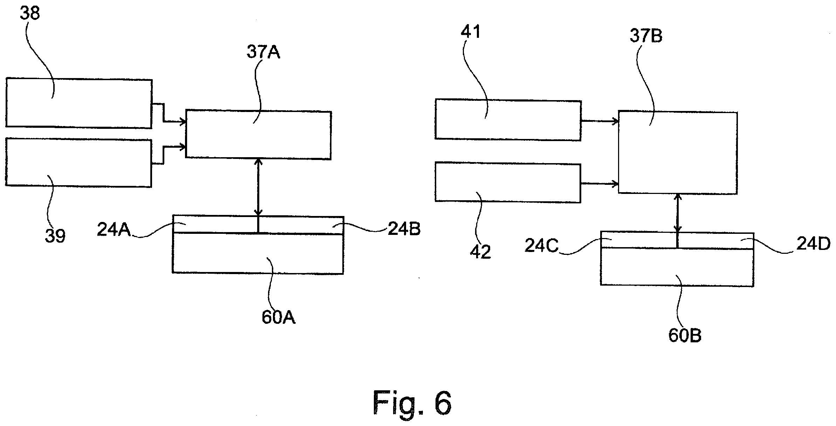

**Figur 6** zeigt ein Blockschaltbild eines weiteren Ausführungsbeispiels einer Anordnung von Einheiten zur Bildstabilisierung. Das Ausführungsbeispiel der **Figur 6** beruht auf dem Ausführungsbeispiel der **Figur 3.** Gleiche Baueinheiten sind mit gleichen Bezugszeichen versehen. Bei diesem Ausführungsbeispiel ist es vorgesehen, dass für jedes der beiden oben genannten Gehäuseteile 2 und 3 eine separate Steuereinheit vorgesehen ist. So sind in dem ersten Gehäuseteil 2 die erste Bildstabilisierungseinheit 16A mit der ersten Kardanik 60A, die erste Antriebseinheit 24A, die zweite Antriebseinheit 24B und die erste Steuer- und Kontrolleinheit 37A angeordnet. Die erste Steuer- und Kontrolleinheit 37A ist mit dem ersten Winkelgeschwindigkeitsdetektor 38 und dem zweiten Winkelgeschwindigkeitsdetektor 39 verbunden, die ebenfalls in dem ersten Gehäuseteil 2 angeordnet sind. Hingegen sind im zweiten Gehäuseteil 3 die zweite Bildstabilisierungseinheit 16B mit der zweiten Kardanik 60B, die dritte Antriebseinheit 24C, die vierte Antriebseinheit 24D und die zweite Steuer- und Kontrolleinheit 37B angeordnet. Ferner sind in dem zweiten Gehäuseteil 3 ein dritter Winkelgeschwindigkeitsdetektor 41 und ein vierter Winkelgeschwindigkeitsdetektor 42 angeordnet, welche die Bewegungen des Fernglases 1 ermitteln.

Das in der **Figur 6** dargestellte Ausführungsbeispiel dient der Ausführung des nachfolgend geschilderten Verfahrens. Eine Bewegung des Fernglases 1 wird mittels des ersten Winkelgeschwindigkeitsdetektors 38 und des zweiten Winkelgeschwindigkeitsdetektors 39 detektiert. Es werden erste Detektorsignale erzeugt, welche jeweils auf einem ersten Messkoordinatensystem des ersten Winkelgeschwindigkeitsdetektors 38 und des zweiten Winkelgeschwindigkeitsdetektors 39 basieren. Das erste Messkoordinatensystem umfasst beispielsweise eine erste Messachse und eine zweite Messachse, die senkrecht zueinander angeordnet sind. Beispielsweise sind die erste Messachse und die zweite Messachse jeweils senkrecht zur ersten optischen Achse 10 des Fernglases 1 ausgerichtet. Von den erhaltenen Detektorsignalen wird ein Mittelwert gebildet. Darüber hinaus erfolgt ein Detektieren der Bewegung des Fernglases 1 mittels des dritten Winkelgeschwindigkeitsdetektors 41 und des vierten Winkelgeschwindigkeitsdetektors 42. Es werden zweite Detektorsignale erzeugt, welche jeweils auf einem zweiten Messkoordinatensystem des dritten Winkelgeschwindigkeitsdetektors 41 und des vierten Winkelgeschwindigkeitsdetektors 42 basieren. Das zweite Messkoordinatensystem umfasst beispielsweise eine dritte Messachse und eine vierte Messachse, die senkrecht zueinander angeordnet sind. Beispielsweise sind die dritte Messachse und die vierte Messachse jeweils senkrecht zur zweiten optischen Achse 11 des Fernglases 1 ausgerichtet. Von den erhaltenen Detektorsignalen wird ein weiterer Mittelwert gebildet. Nun erfolgen folgende Verfahrensschritte:

- Transformieren des ersten Detektorsignals in ein drittes Detektorsignal, das auf dem zweiten Messkoordinatensystem des dritten Winkelgeschwindigkeitsdetektors 41 basiert;
- Transformieren des zweiten Detektorsignals in ein viertes Detektorsignal, das auf dem ersten Messkoordinatensystem des ersten Winkelgeschwindigkeitsdetektors 38 basiert;
- Berechnen eines ersten Detektor-Mittelwerts aus dem dritten Detektorsignal und dem zweiten Detektorsignal;
- Berechnen eines zweiten Detektor-Mittelwerts aus dem vierten Detektorsignal und dem ersten Detektorsignal;
- Bewegen der ersten Bildstabilisierungseinheit 16A basierend auf dem zweiten Detektor-Mittelwert, sowie
- Bewegen der zweiten Bildstabilisierungseinheit 16B basierend auf dem ersten Detektor-Mittelwert.

Hinsichtlich der Vorteile und Wirkung dieses Verfahrens wird auf weiter oben verwiesen.

Bei dem hier dargestellten Ausführungsbeispiel des Verfahrens ist es vorgesehen, dass das Transformieren des ersten Detektorsignals in das dritte Detektorsignal nach den Gleichungen 3 und 4 erfolgt, die oben bereits erläutert wurden. Das Transformieren des zweiten Detektorsignals in das vierte Detektorsignal erfolgt beispielsweise durch die bereits oben erläuterten Gleichungen 5 und 6. Sämtliche Berechnungen werden in der ersten Steuer- und Kontrolleinheit 37A oder in der zweiten Steuer- und Kontrolleinheit 37B durchgeführt.

Ferner ist es bei dem hier dargestellten Ausführungsbeispiel vorgesehen, dass die Berechnung des ersten Detektor-Mittelwerts durch die Gleichungen 7 und 8 erfolgt. Die Berechnung des zweiten Detektor-Mittelwerts erfolgt durch die Gleichungen 9 und 10. Sämtliche Berechnungen werden in der ersten Steuer- und Kontrolleinheit 37A oder in der zweiten Steuer- und Kontrolleinheit 37B durchgeführt.

Bei dem hier dargestellten Ausführungsbeispiel des Verfahrens ist es vorgesehen, die vorgebbaren Transformationsfaktoren bzw. vorgebbaren Rücktransformationsfaktoren auf eine bestimmte Art zu ermitteln. Beispielsweise erfolgt dies durch die Gleichungen 11 bis 18, wie oben bereits erläutert. Sämtliche Berechnungen werden in der ersten Steuer- und Kontrolleinheit 37A oder in der zweiten Steuer- und Kontrolleinheit 37B durchgeführt. Ferner ist es bei diesem Ausführungsbeispiel vorgesehen, dass die Transformationsfaktoren und Rücktransformationsfaktoren bestimmten Relationen genügen. Bei diesem Ausführungsbeispiel des Verfahrens gelten die bereits oben genannten Gleichungen 19 bis 26.

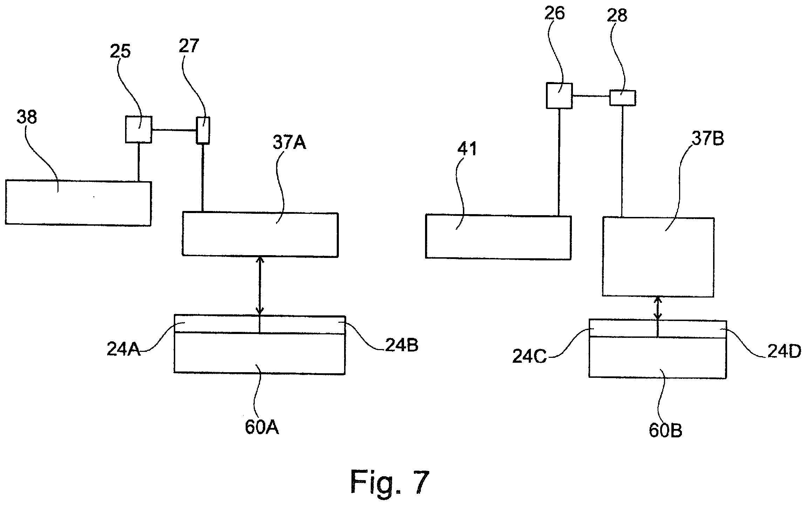

**Figur 7** zeigt ein Blockschaltbild eines weiteren Ausführungsbeispiels einer Anordnung von Einheiten zur Bildstabilisierung. Das Ausführungsbeispiel der **Figur 7** beruht auf dem Ausführungsbeispiel der **Figur 6.** Gleiche Baueinheiten sind mit gleichen Bezugszeichen versehen. Im Unterschied zu dem Ausführungsbeispiel gemäß der **Figur 6** weist das Ausführungsbeispiel gemäß der **Figur 7** nur den ersten Winkelgeschwindigkeitsdetektor 38 in dem ersten Gehäuseteil 2 auf. Im zweiten Gehäuseteil 3 ist nur der dritte Winkelgeschwindigkeitsdetektor 41 vorgesehen. Das Detektorsignal des ersten Winkelgeschwindigkeitsdetektors 38 wird mittels eines ersten Tiefpassfilters 25 und mittels eines ersten Hochpassfilters 27 gefiltert. Ferner wird das Detektorsignal des dritten Winkelgeschwindigkeitsdetektors 41 mittels eines zweiten Tiefpassfilters 26 und mittels eines zweiten Hochpassfilters 28 gefiltert. Die Grenzfrequenz des ersten Tiefpassfilters 25 und des zweiten Tiefpassfilters 26 liegt bei 1 Hz. Wie oben bereits erläutert, erfolgt dies, um das Rauschen der Transformationsfaktoren und/oder der Rücktransformationsfaktoren möglichst gut zu unterdrücken.

Alternativ oder zusätzlich zur Tiefpassfilterung bietet sich zur Eliminierung des Rauschens auch eine Berechnung der Transformationsfaktoren und/oder der Rücktransformationsfaktoren mittels einer Durchschnittsberechnung an. Hierzu werden die Transformationsfaktoren und/oder die Rücktransformationsfaktoren durch die bereits oben erläuterten Gleichungen 27 bis 34 bestimmt. Sämtliche Berechnungen werden in der ersten Steuer- und Kontrolleinheit 37A oder in der zweiten Steuer- und Kontrolleinheit 37B durchgeführt. Bei einem weiteren Ausführungsbeispiel ist es alternativ vorgesehen, nicht die gefilterten Teilsignale zu verwenden, sondern von den jeweiligen Teilsignalen einen Mittelwert über einen vorgebbaren Zeitraum zu bestimmen und diesen zur Berechung der Transformationsfaktoren und/oder der Rücktransformationsfaktoren zu verwenden, wie bereits oben erläutert.

Die Grenzfrequenz des ersten Hochpassfilters 27 und des zweiten Hochpassfilters 28 liegt bei ca. 0,2 Hz. Durch Filterung der Detektorsignale mit dem ersten Hochpassfilter 27 und dem zweiten Hochpassfilter 28 ist es möglich, eine Änderung des Relativwinkels zwischen dem ersten Scharnierteil 5 und dem zweiten Scharnierteil 6 festzustellen, wie oben ebenfalls erläutert. Die Änderungen von Detektorsignalen führen auch zu einer Änderung der Transformationsfaktoren und/oder der Rücktransformationsfaktoren. Wenn eine Veränderung festgestellt wird, dann werden die Transformationsfaktoren und/oder die Rücktransformationsfaktoren neu bestimmt, beispielsweise wie bereits weiter oben beschrieben wurde.

**Bezugszeichenliste**

| | |
|---|---|
| 1 | Fernglas |
| 2 | erstes Gehäuseteil |
| 3 | zweites Gehäuseteil |
| 4 | Knickbrücke |
| 5 | erstes Scharnierteil |
| 6 | zweites Scharnierteil |
| 7 | erstes Aufnahmeteil |
| 8 | zweites Aufnahmeteil |
| 9 | drittes Aufnahmeteil |
| 10 | erste optische Achse |
| 11 | zweite optische Achse |
| 12 | erstes optisches Teilsystem |
| 13 | zweites optisches Teilsystem |
| 14A | erstes Objektiv |
| 14B | zweites Objektiv |
| 15A | erstes Auge |
| 15B | zweites Auge |
| 16A | erste Bildstabilisierungseinheit (erstes Prismensystem) |
| 16B | zweite Bildstabilisierungseinheit (zweites Prismensystem) |
| 17A | erstes Okular |
| 17B | zweites Okular |
| 18A | erste Achse |
| 18B | dritte Achse |
| 19A | zweite Achse |
| 19B | vierte Achse |
| 20A | erster Schnittpunkt |
| 21 | erste Eintrittsfläche |
| 22 | erste Austrittsfläche |
| 23A | linke Zwischenbildebene |
| 23B | rechte Zwischenbildebene |
| 24 | Antriebseinheit (Piezo-Biegeaktor) |
| 24A | erste Antriebseinheit |
| 24B | zweite Antriebseinheit |
| 24C | dritte Antriebseinheit |
| 24D | vierte Antriebseinheit |
| 25 | erster Tiefpassfilter |
| 26 | zweiter Tiefpassfilter |
| 27 | erster Hochpassfilter |
| 28 | zweiter Hochpassfilter |
| 37 | Steuer- und Kontrolleinheit |
| 37A | erste Steuer- und Kontrolleinheit |
| 37B | zweite Steuer- und Kontrolleinheit |
| 38 | erster Winkelgeschwindigkeitsdetektor |
| 39 | zweiter Winkelgeschwindigkeitsdetektor |
| 40 | Knickbrückensensor |
| 41 | dritter Winkelgeschwindigkeitsdetektor |
| 42 | vierter Winkelgeschwindigkeitsdetektor |
| 51A | erste Fronteinheit |
| 51B | zweite Fronteinheit |
| 52A | erste Fokussiereinheit |
| 52B | zweite Fokussiereinheit |
| 53 | Drehknopf |
| 54A | erste Aperturblende |
| 54B | zweite Aperturblende |
| 55A | erste Augenmuschel |
| 55B | zweite Augenmuschel |

| 60A | erste Kardanik |
|---|---|
| 60B | zweite Kardanik |
| 61A | erste äußere Aufhängung |
| 61B | zweite äußere Aufhängung |
| 62A | erste innere Aufhängung |
| 62B | zweite innere Aufhängung |
| 71 | Klemmhalter |
| 72 | erste Scharnierteilachse |
| 73 | zweite Scharnierteilachse |
| 74 | Gelenkachse |

| O | Objekt |
|---|---|
| α | Relativwinkel |

**Patentansprüche**

1. Verfahren zur Einstellung einer ersten Position einer ersten Bildstabilisierungseinheit (16A) in einem ersten Gehäuse (2) eines optischen Systems (1) und einer zweiten Position einer zweiten Bildstabilisierungseinheit (16B) in einem zweiten Gehäuse (3) des optischen Systems (1), wobei

 - die erste Bildstabilisierungseinheit (16A) zusammen mit mindestens einem ersten Drehwinkeldetektor (38, 39) in dem ersten Gehäuse (2) angeordnet ist,
 - die zweite Bildstabilisierungseinheit (16B) zusammen mit mindestens einem zweiten Drehwinkeldetektor (41, 42) in dem zweiten Gehäuse (3) angeordnet ist,
 - das erste Gehäuse (2) mit dem zweiten Gehäuse (3) über mindestens eine Knickbrücke (4) verbunden ist,
 - die Knickbrücke (4) ein an dem ersten Gehäuse (2) angeordnetes erstes Scharnierteil (5) und ein an dem zweiten Gehäuse (3) angeordnetes zweites Scharnierteil (6) aufweist,

 wobei das Verfahren die folgenden Schritte aufweist:

 - Detektieren einer Bewegung des optischen Systems (1) mittels des ersten Drehwinkeldetektors (38, 39) und Erzeugen eines ersten Detektorsignals, welches auf einem ersten Messkoordinatensystem des ersten Drehwinkeldetektors (38, 39) basiert;
 - Detektieren der Bewegung des optischen Systems (1) mittels des zweiten Drehwinkeldetektors (41, 42) und Erzeugen eines zweiten Detektorsignals, welches auf einem zweiten Messkoordinatensystem des zweiten Drehwinkeldetektors (41, 42) basiert, **dadurch gekennzeichnet, dass** das Verfahren die folgenden Schritte aufweist:

 - Transformieren des ersten Detektorsignals in ein drittes Detektorsignal, das auf dem zweiten Messkoordinatensystem des zweiten Drehwinkeldetektors (41, 42) basiert,
 - Transformieren des zweiten Detektorsignals in ein viertes Detektorsignal, das auf dem ersten Messkoordinatensystem des ersten Drehwinkeldetektors (38, 39) basiert,
 - Berechnen eines ersten Mittelwerts aus dem dritten Detektorsignal und dem zweiten Detektorsignal,
 - Berechnen eines zweiten Mittelwerts aus dem vierten Detektorsignal und dem ersten Detektorsignal,
 - Bewegen der ersten Bildstabilisierungseinheit (16A) basierend auf dem zweiten Mittelwert, sowie
 - Bewegen der zweiten Bildstabilisierungseinheit (16B) basierend auf dem ersten Mittelwert.

2. Verfahren nach Anspruch 1, **dadurch gekennzeichnet, dass** das Verfahren die folgenden Schritte aufweist:

 - das Transformieren des ersten Detektorsignals in das dritte Detektorsignal erfolgt durch

$$\text{Gleichung 3} \qquad b_x = a_x \cdot \gamma_1 + a_y \cdot \gamma_2$$

$$\text{Gleichung 4} \qquad b_y = a_x \cdot \gamma_3 + a_y \cdot \gamma_4$$

wobei

$a_x$ ein erstes Teilsignal der Bewegung des optischen Systems (1) relativ zu einer ersten Messachse des ersten Messkoordinatensystems ist;

$a_y$ ein zweites Teilsignal der Bewegung des optischen Systems (1) relativ zu einer zweiten Messachse des ersten Messkoordinatensystems ist;

$b_x$ ein erstes transformiertes Teilsignal des ersten Teilsignals ist;

$b_y$ ein zweites transformiertes Teilsignal des zweiten Teilsignals ist;

$\gamma_1$ ein erster vorgebbarer Transformationsfaktor ist;

$\gamma_2$ ein zweiter vorgebbarer Transformationsfaktor ist;

$\gamma_3$ ein dritter vorgebbarer Transformationsfaktor ist; und

$\gamma_4$ ein vierter vorgebbarer Transformationsfaktor ist;

- das Transformieren des zweiten Detektorsignals in das vierte Detektorsignal erfolgt durch

$$\text{Gleichung 5} \qquad a'_x = b'_x \cdot \gamma'_1 + b'_y \cdot \gamma'_2$$

$$\text{Gleichung 6} \qquad a'_y = b'_x \cdot \gamma'_3 + b'_y \cdot \gamma'_4$$

wobei

$b'_x$ ein drittes Teilsignal der Bewegung des optischen Systems (1) relativ zu einer dritten Messachse des zweiten Messkoordinatensystems ist;

$b'_y$ ein viertes Teilsignal der Bewegung des optischen Systems (1) relativ zu einer vierten Messachse des zweiten Messkoordinatensystems ist;

$a'_x$ ein drittes transformiertes Teilsignal des dritten Teilsignals ist;

$a'_y$ ein viertes transformiertes Teilsignal des vierten Teilsignals ist;

$\gamma'_1$ ein erster vorgebbarer Rücktransformationsfaktor ist;

$\gamma'_2$ ein zweiter vorgebbarer Rücktransformationsfaktor ist;

$\gamma'_3$ ein dritter vorgebbarer Rücktransformationsfaktor ist; und

$\gamma'_4$ ein vierter vorgebbarer Rücktransformationsfaktor ist.

3. Verfahren nach Anspruch 2, **dadurch gekennzeichnet, dass** das Verfahren mindestens einen der folgenden Schritte aufweist:

- die Berechnung des ersten Mittelwerts erfolgt durch

$$\text{Gleichung 7} \qquad x_2 = \frac{(b'_x + b_x)}{2}$$

$$\text{Gleichung 8} \qquad y_2 = \frac{(b'_y + b_y)}{2}$$

wobei $x_2$ eine erste Drehkoordinate um die dritte Achse des zweiten Messkoordinatensystems ist, und wobei $y_2$ eine zweite Drehkoordinate um die vierte Achse des zweiten Messkoordinatensystems ist, oder
- die Berechnung des zweiten Mittelwerts erfolgt durch

$$\text{Gleichung 9} \qquad x_1 = \frac{(a'_x + a_x)}{2}$$

Gleichung 10

$$y_1 = \frac{(a'_y + a_y)}{2}$$

wobei $x_1$ eine erste Drehkoordinate um die erste Achse des ersten Messkoordinatensystems ist, und wobei $y_1$ eine zweite Drehkoordinate um die zweite Achse des ersten Messkoordinatensystems ist.

**4.** Verfahren nach Anspruch 2 oder 3, **dadurch gekennzeichnet, dass** das Verfahren mindestens einen der folgenden Schritte aufweist:

- Ermitteln des ersten vorgebbaren Transformationsfaktors $\gamma_1$ durch

Gleichung 11

$$\gamma_1 = \frac{(a_y \cdot b_y + a_x \cdot b_x)}{(a_x)^2 + (a_y)^2}$$

- Ermitteln des zweiten vorgebbaren Transformationsfaktors $\gamma_2$ durch

Gleichung 12

$$\gamma_2 = \frac{(a_y \cdot b_x - a_x \cdot b_y)}{(a_x)^2 + (a_y)^2}$$

- Ermitteln des dritten vorgebbaren Transformationsfaktors $\gamma_3$ durch

Gleichung 13

$$\gamma_3 = \frac{(a_x \cdot b_y - a_y \cdot b_x)}{(a_x)^2 + (a_y)^2}$$

- Ermitteln des vierten vorgebbaren Transformationsfaktors $\gamma_4$ durch

Gleichung 14

$$\gamma_4 = \frac{(a_x \cdot b_x + a_y \cdot b_y)}{(a_x)^2 + (a_y)^2}$$

- Ermitteln des ersten vorgebbaren Rücktransformationsfaktors $\gamma'_1$ durch

Gleichung 15

$$\gamma'_1 = \frac{(a'_y \cdot b'_y + a'_x \cdot b'_x)}{(a'_x)^2 + (a'_y)^2}$$

- Ermitteln des zweiten vorgebbaren Rücktransformationsfaktors $\gamma'_2$ durch

Gleichung 16

$$\gamma'_2 = \frac{(a'_x \cdot b'_y - a'_y \cdot b'_x)}{(a'_x)^2 + (a'_y)^2}$$

- Ermitteln des dritten vorgebbaren Rücktransformationsfaktors $\gamma'_3$ durch

Gleichung 17

$$\gamma'_3 = \frac{(a'_y \cdot b'_x - a'_x \cdot b'_y)}{(a'_x)^2 + (a'_y)^2}$$

- Ermitteln des vierten vorgebbaren Rücktransformationsfaktors $\gamma'_4$ durch

Gleichung 18
$$\gamma'_4 = \frac{(a'_x \cdot b'_x + a'_y \cdot b'_y)}{(a'_x)^2 + (a'_y)^2}$$

5. Verfahren nach Anspruch 3 oder 4, **dadurch gekennzeichnet, dass** für das Verfahren mindestens eine der folgenden Gleichungen gilt:

Gleichung 19 $\qquad\qquad \gamma_2 = -\gamma_3$

Gleichung 20 $\qquad\qquad \gamma'_2 = -\gamma_3$

Gleichung 21 $\qquad\qquad \gamma'_1 = \gamma_1$

Gleichung 22 $\qquad\qquad \gamma'_4 = \gamma_4$

Gleichung 23 $\qquad\qquad \gamma_2 = -\sin(\arccos(\gamma_1))$

Gleichung 24 $\qquad\qquad \gamma_1 = \cos(\arcsin(\gamma_2))$

Gleichung 25 $\qquad\qquad \gamma'_2 = \sin(\arccos(\gamma'_1))$

Gleichung 26 $\qquad\qquad \gamma'_1 = \cos(\arcsin(\gamma'_2))$

6. Verfahren nach einem der Ansprüche 1 bis 5, **dadurch gekennzeichnet, dass** das Verfahren mindestens einen der folgenden Schritte aufweist:

   - Bearbeiten des ersten Detektorsignals mittels eines ersten Tiefpassfilters (25) und Erzeugen eines ersten gefilterten Detektorsignals;
   - Bearbeiten des ersten Detektorsignals mittels eines ersten Tiefpassfilters (25), der eine Grenzfrequenz von 1 Hz aufweist, und Erzeugen eines ersten gefilterten Detektorsignals;
   - Bearbeiten des zweiten Detektorsignals mittels eines zweiten Tiefpassfilters (26) und Erzeugen eines zweiten gefilterten Detektorsignals; oder
   - Bearbeiten des zweiten Detektorsignals mittels eines zweiten Tiefpassfilters (26), der eine Grenzfrequenz von 1 Hz aufweist, und Erzeugen eines zweiten gefilterten Detektorsignals.

7. Verfahren nach Anspruch 2, **dadurch gekennzeichnet, dass** das Verfahren mindestens einen der folgenden Schritte aufweist:

   - Ermitteln des ersten vorgebbaren Transformationsfaktors $\gamma_1$ durch

Gleichung 27
$$\gamma_1 = \frac{(<a_y> \cdot <b_y> + <a_x> \cdot <b_x>)}{(<a_x>)^2 + (<a_y>)^2}$$

   - Ermitteln des zweiten vorgebbaren Transformationsfaktors $\gamma_2$ durch

Gleichung 28

$$\gamma_2 = \frac{(<a_y> \cdot <b_x> - <a_x> \cdot <b_y>)}{(<a_x>)^2 + (<a_y>)^2}$$

- Ermitteln des dritten vorgebbaren Transformationsfaktors $\gamma_3$ durch

Gleichung 29

$$\gamma_3 = \frac{(<a_x> \cdot <b_y> - <a_y> \cdot <b_x>)}{(<a_x>)^2 + (<a_y>)^2}$$

- Ermitteln des vierten vorgebbaren Transformationsfaktors $\gamma_4$ durch

Gleichung 30

$$\gamma_4 = \frac{(<a_x> \cdot <b_x> + <a_y> \cdot <b_y>)}{(<a_x>)^2 + (<a_y>)^2}$$

- Ermitteln des ersten vorgebbaren Rücktransformationsfaktors $\gamma'_1$ durch

Gleichung 31

$$\gamma'_1 = \frac{(<a'_y> \cdot <b'_y> + <a'_x> \cdot <b'_x>)}{(<a'_x>)^2 + (<a'_y>)^2}$$

- Ermitteln des zweiten vorgebbaren Rücktransformationsfaktors $\gamma'_2$ durch

Gleichung 32

$$\gamma'_2 = \frac{(<a'_x> \cdot <b'_y> - <a'_y> \cdot <b'_x>)}{(<a'_x>)^2 + (<a'_y>)^2}$$

- Ermitteln des dritten vorgebbaren Rücktransformationsfaktors $\gamma'_3$ durch

Gleichung 33

$$\gamma'_3 = \frac{(<a'_y> \cdot <b'_x> - <a'_x> \cdot <b'_y>)}{(<a'_x>)^2 + (<a'_y>)^2}$$

- Ermitteln des vierten vorgebbaren Rücktransformationsfaktors $\gamma'_4$ durch

Gleichung 34

$$\gamma'_4 = \frac{(<a'_x> \cdot <b'_x> + <a'_y> \cdot <b'_y>)}{(<a'_x>)^2 + (<a'_y>)^2}$$

wobei

$<a_x>$ ein erstes gefiltertes Teilsignal der Bewegung des optischen Systems (1) relativ zu einer ersten Messachse des ersten Messkoordinatensystems ist;
$<a_y>$ ein zweites gefiltertes Teilsignal der Bewegung des optischen Systems (1) relativ zu einer zweiten Messachse des ersten Messkoordinatensystems ist;
$<b_x>$ ein erstes gefiltertes transformiertes Teilsignal des ersten Teilsignals ist;
$<b_y>$ ein zweites gefiltertes transformiertes Teilsignal des zweiten Teilsignals ist;
$<b'_x>$ ein drittes gefiltertes Teilsignal der Bewegung des optischen Systems (1) relativ zu einer dritten Messachse des zweiten Messkoordinatensystems ist;
$<b'_y>$ ein viertes gefiltertes Teilsignal der Bewegung des optischen Systems (1) relativ zu einer vierten Messachse des zweiten Messkoordinatensystems ist;

$<a'_x>$ ein drittes gefiltertes transformiertes Teilsignal des dritten Teilsignals ist; und wobei

$<a'_y>$ ein viertes gefiltertes transformiertes Teilsignal des vierten Teilsignals ist.

8. Verfahren nach einem der Ansprüche 2 bis 7 **dadurch gekennzeichnet, dass** das Verfahren mindestens einen der folgenden Schritte aufweist:

   - Bearbeiten von mindestens einem der vorgebbaren Transformationsfaktoren oder vorgebbaren Rücktransformationsfaktoren mittels eines Hochpassfilters (27, 28) und Erzeugen eines Hochpassfiltersignals; oder
   - Bearbeiten von mindestens einem der vorgebbaren Transformationsfaktoren oder vorgebbaren Rücktransformationsfaktoren mittels eines Hochpassfilters (27, 28), der eine Grenzfrequenz von 0,2 Hz aufweist, und Erzeugen eines Hochpassfiltersignals.

9. Verfahren nach Anspruch 8, **dadurch gekennzeichnet, dass** das Bearbeiten von mindestens einem der vorgebbaren Transformationsfaktoren oder vorgebbaren Rücktransformationsfaktoren ein Bearbeiten einer Summe von mindestens zwei der vorgebbaren Transformationsfaktoren oder mindestens zwei der vorgebbaren Rücktransformationsfaktoren umfasst.

10. Optisches System (1) zur Abbildung eines Objekts zur Durchführung eines Verfahrens nach einem der Ansprüche 1 bis 9,

   - mit mindestens einem ersten Gehäuse (2) und mit mindestens einem zweiten Gehäuse (3), wobei
   - das erste Gehäuse (2) mit dem zweiten Gehäuse (3) über mindestens eine Knickbrücke (4) verbunden ist,
   - die Knickbrücke (4) ein an dem ersten Gehäuse (2) angeordnetes erstes Scharnierteil (5) aufweist,
   - die Knickbrücke (4) ein an dem zweiten Gehäuse (3) angeordnetes zweites Scharnierteil (6) aufweist,
   - das erste Gehäuse (2) mindestens ein erstes Objektiv (14A) aufweist,
   - das zweite Gehäuse (3) mindestens ein zweites Objektiv (14B) aufweist,
   - das erste Gehäuse (2) mindestens einen ersten Drehwinkeldetektor (38, 39) zur Messung einer Bewegung des optischen Systems (1) aufweist,
   - das erste Gehäuse (2) mindestens eine erste Bildstabilisierungseinheit (16A) aufweist,
   - das zweite Gehäuse (3) mindestens eine zweite Bildstabilisierungseinheit (16B) aufweist,
   - das zweite Gehäuse (2) mindestens einen zweiten Drehwinkeldetektor (41, 42) zur Messung einer Bewegung des optischen Systems (1) aufweist, und wobei
   - an dem optischen System (1) mindestens eine Steuereinheit (37, 37A, 37B) angeordnet ist, die mit der ersten Bildstabilisierungseinheit (16A) zur Steuerung einer Bewegung der ersten Bildstabilisierungseinheit (16A) und/oder die mit der zweiten Bildstabilisierungseinheit (16B) zur Steuerung einer Bewegung der zweiten Bildstabilisierungseinheit (16B) verbunden ist,
   **dadurch gekennzeichnet, dass**
   die Steuereinheit (37, 37A, 37B) eine Speichereinheit aufweist, in der ein Programmcode geladen ist, der bei Ausführung in einem Prozessor der Steuereinheit (37, 37A, 37B) ein Verfahren nach einem der vorangehenden Ansprüche ausführt.

11. Optisches System (1) nach Anspruch 10, **dadurch gekennzeichnet, dass** das optische System (1) mindestens eines der folgenden Merkmale aufweist:

   - mindestens einen Tiefpassfilter (25, 26); oder
   - mindestens einen Hochpassfilter (27, 28).

Claims

1. Method for setting a first position of a first image stabilizing unit (16A) in a first housing (2) of an optical system (1) and a second position of a second image stabilizing unit (16B) in a second housing (3) of the optical system (1), wherein

   - the first image stabilizing unit (16A) is arranged together with at least one first rotational angle detector (38, 39) in the first housing (2),

- the second image stabilizing unit (16B) is arranged together with at least one second rotational angle detector (41, 42) in the second housing (3),
- the first housing (2) is connected to the second housing (3) by means of at least one hinge bridge (4),
- the hinge bridge (4) comprises a first hinge part (5) arranged on the first housing (2) and a second hinge part (6) arranged on the second housing (3),

wherein the method includes the following steps:

- detecting a movement of the optical system (1) by means of the first rotational angle detector (38, 39) and generating a first detector signal which is based on a first measurement coordinate system of the first rotational angle detector (38, 39);
- detecting the movement of the optical system (1) by means of the second rotational angle detector (41, 42) and generating a second detector signal which is based on a second measurement coordinate system of the second rotational angle detector (41, 42),

**characterized in that** the method includes the following steps:

- transforming the first detector signal into a third detector signal which is based on the second measurement coordinate system of the second rotational angle detector (41, 42),
- transforming the second detector signal into a fourth detector signal which is based on the first measurement coordinate system of the first rotational angle detector (38, 39),
- calculating a first mean value from the third detector signal and the second detector signal,
- calculating a second mean value from the fourth detector signal and the first detector signal,
- moving the first image stabilizing unit (16A) on the basis of the second mean value, and
- moving the second image stabilizing unit (16B) on the basis of the first mean value.

2. Method according to Claim 1, **characterized in that** the method includes the following steps:

- the first detector signal is transformed into the third detector signal by

$$\text{Equation 3:} \qquad b_x = a_x \cdot \gamma_1 + a_y \cdot \gamma_2,$$

$$\text{Equation 4:} \qquad b_y = a_x \cdot \gamma_3 + a_y \cdot \gamma_4,$$

where

$a_x$ is a first partial signal of the movement of the optical system (1) relative to a first measurement axis of the first measurement coordinate system;
$a_y$ is a second partial signal of the movement of the optical system (1) relative to a second measurement axis of the first measurement coordinate system;
$b_x$ is a first transformed partial signal of the first partial signal;
$b_y$ is a second transformed partial signal of the second partial signal;
$\gamma_1$ is a first specifiable transformation factor;
$\gamma_2$ is a second specifiable transformation factor;
$\gamma_3$ is a third specifiable transformation factor; and
$\gamma_4$ is a fourth specifiable transformation factor;

- the second detector signal is transformed into the fourth detector signal by

$$\text{Equation 5:} \qquad a'_x = b'_x \cdot \gamma'_1 + b'_y \cdot \gamma'_2,$$

$$\text{Equation 6:} \qquad a'_y = b'_x \cdot \gamma'_3 + b'_y \cdot \gamma'_4,$$

where

$b'_x$ is a third partial signal of the movement of the optical system (1) relative to a third measurement axis of the second measurement coordinate system;

$b'_y$ is a fourth partial signal of the movement of the optical system (1) relative to a fourth measurement axis of the second measurement coordinate system;

$a'_x$ is a third transformed partial signal of the third partial signal;

$a'_y$ is a fourth transformed partial signal of the fourth partial signal;

$\gamma'_1$ is a first specifiable inverse transformation factor;

$\gamma'_2$ is a second specifiable inverse transformation factor;

$\gamma'_3$ is a third specifiable inverse transformation factor; and

$\gamma'_4$ is a fourth specifiable inverse transformation factor.

**3.** Method according to Claim 2, **characterized in that** the method includes at least one of the following steps:

- the first mean value is calculated by

$$\text{Equation 7:} \qquad x_2 = \frac{\left(b'_x + b_x\right)}{2}$$

$$\text{Equation 8:} \qquad y_2 = \frac{\left(b'_y + b_y\right)}{2}$$

where $x_2$ is a first rotational coordinate about the third axis of the second measurement coordinate system and where $y_2$ is a second rotational coordinate about the fourth axis of the second measurement coordinate system, or
- the second mean value is calculated by

$$\text{Equation 9:} \qquad x_1 = \frac{\left(a'_x + a_x\right)}{2}$$

$$\text{Equation 10:} \qquad y_1 = \frac{\left(a'_y + a_y\right)}{2}$$

where $x_1$ is a first rotational coordinate about the first axis of the first measurement coordinate system and where $y_1$ is a second rotational coordinate about the second axis of the first measurement coordinate system.

**4.** Method according to Claim 2 or 3, **characterized in that** the method includes at least one of the following steps:

- determining the first specifiable transformation factor $\gamma_1$ by

$$\text{Equation 11:} \qquad \gamma_1 = \frac{\left(a_y \cdot b_y + a_x \cdot b_x\right)}{\left(a_x\right)^2 + \left(a_y\right)^2},$$

- determining the second specifiable transformation factor $\gamma_2$ by

$$\text{Equation 12:} \qquad \gamma_2 = \frac{\left(a_y \cdot b_x - a_x \cdot b_y\right)}{\left(a_x\right)^2 + \left(a_y\right)^2},$$

- determining the third specifiable transformation factor $\gamma_3$ by

$$\text{Equation 13:} \quad \gamma_3 = \frac{\left(a_x \cdot b_y - a_y \cdot b_x\right)}{\left(a_x\right)^2 + \left(a_y\right)^2},$$

- determining the fourth specifiable transformation factor $\gamma_4$ by

$$\text{Equation 14:} \quad \gamma_4 = \frac{\left(a_x \cdot b_x + a_y \cdot b_y\right)}{\left(a_x\right)^2 + \left(a_y\right)^2},$$

- determining the first specifiable inverse transformation factor $\gamma'_1$ by

$$\text{Equation 15:} \quad \gamma'_1 = \frac{\left(a'_y \cdot b'_y + a'_x \cdot b'_x\right)}{\left(a'_x\right)^2 + \left(a'_y\right)^2},$$

- determining the second specifiable inverse transformation factor $\gamma'_2$ by

$$\text{Equation 16:} \quad \gamma'_2 = \frac{\left(a'_x \cdot b'_y - a'_y \cdot b'_x\right)}{\left(a'_x\right)^2 + \left(a'_y\right)^2},$$

- determining the third specifiable inverse transformation factor $\gamma'_3$ by

$$\text{Equation 17:} \quad \gamma'_3 = \frac{\left(a'_y \cdot b'_x - a'_x \cdot b'_y\right)}{\left(a'_x\right)^2 + \left(a'_y\right)^2},$$

- determining the fourth specifiable inverse transformation factor $\gamma'_4$ by

$$\text{Equation 18:} \quad \gamma'_4 = \frac{\left(a'_x \cdot b'_x + a'_y \cdot b'_y\right)}{\left(a'_x\right)^2 + \left(a'_y\right)^2}.$$

5. Method according to Claim 3 or 4, **characterized in that** at least one of the following equations applies to the method:

$$\text{Equation 19:} \quad \gamma_2 = -\gamma_3$$

$$\text{Equation 20:} \quad \gamma'_2 = -\gamma_3$$

$$\text{Equation 21:} \quad \gamma'_1 = \gamma_1$$

$$\text{Equation 22:} \quad \gamma'_4 = \gamma_4$$

$$\text{Equation 23:} \quad \gamma_2 = -\sin(\arccos(\gamma_1))$$

$$\text{Equation 24:} \quad \gamma_1 = \cos(\arcsin(\gamma_2))$$

$$\text{Equation 25:} \quad \gamma'_2 = \sin(\arccos(\gamma'_1))$$

$$\text{Equation 26:} \quad \gamma'_1 = \cos(\arcsin(\gamma'_2))$$

**6.** Method according to any of Claims 1 to 5, **characterized in that** the method includes at least one of the following steps:

- processing the first detector signal by means of a first low-pass filter (25) and generating a first filtered detector signal;
- processing the first detector signal by means of a first low-pass filter (25), which has a cut-off frequency of 1 Hz, and generating a first filtered detector signal;
- processing the second detector signal by means of a second low-pass filter (26) and generating a second filtered detector signal; or
- processing the second detector signal by means of a second low-pass filter (26), which has a cut-off frequency of 1 Hz, and generating a second filtered detector signal.

**7.** Method according to Claim 2, **characterized in that** the method includes at least one of the following steps:

- determining the first specifiable transformation factor $\gamma_1$ by

$$\text{Equation 27:} \quad \gamma_1 = \frac{\left(\langle a_y \rangle \cdot \langle b_y \rangle + \langle a_x \rangle \cdot \langle b_x \rangle\right)}{\left(\langle a_x \rangle\right)^2 + \left(\langle a_y \rangle\right)^2},$$

- determining the second specifiable transformation factor $\gamma_2$ by

$$\text{Equation 28:} \quad \gamma_2 = \frac{\left(\langle a_y \rangle \cdot \langle b_x \rangle - \langle a_x \rangle \cdot \langle b_y \rangle\right)}{\left(\langle a_x \rangle\right)^2 + \left(\langle a_y \rangle\right)^2},$$

- determining the third specifiable transformation factor $\gamma_3$ by

$$\text{Equation 29:} \quad \gamma_3 = \frac{\left(\langle a_x \rangle \cdot \langle b_y \rangle - \langle a_y \rangle \cdot \langle b_x \rangle\right)}{\left(\langle a_x \rangle\right)^2 + \left(\langle a_y \rangle\right)^2},$$

- determining the fourth specifiable transformation factor $\gamma_4$ by

$$\text{Equation 30:} \quad \gamma_4 = \frac{\left(\langle a_x \rangle \cdot \langle b_x \rangle + \langle a_y \rangle \cdot \langle b_y \rangle\right)}{\left(\langle a_x \rangle\right)^2 + \left(\langle a_y \rangle\right)^2},$$

- determining the first specifiable inverse transformation factor $\gamma'_1$ by

$$\gamma'_1 = \frac{\left(\langle a'_y \rangle \cdot \langle b'_y \rangle + \langle a'_x \rangle \cdot \langle b'_x \rangle\right)}{\left(\langle a'_x \rangle\right)^2 + \left(\langle a'_y \rangle\right)^2}$$

Equation 31:                   ,

- determining the second specifiable inverse transformation factor $\gamma'_2$ by

$$\gamma'_2 = \frac{\left(\langle a'_x \rangle \cdot \langle b'_y \rangle - \langle a'_y \rangle \cdot \langle b'_x \rangle\right)}{\left(\langle a'_x \rangle\right)^2 + \left(\langle a'_y \rangle\right)^2}$$

Equation 32:                   ,

- determining the third specifiable inverse transformation factor $\gamma'_3$ by

$$\gamma'_3 = \frac{\left(\langle a'_y \rangle \cdot \langle b'_x \rangle - \langle a'_x \rangle \cdot \langle b'_y \rangle\right)}{\left(\langle a'_x \rangle\right)^2 + \left(\langle a'_y \rangle\right)^2}$$

Equation 33:                   ,

- determining the fourth specifiable inverse transformation factor $\gamma'_4$ by

$$\gamma'_4 = \frac{\left(\langle a'_x \rangle \cdot \langle b'_x \rangle + \langle a'_y \rangle \cdot \langle b'_y \rangle\right)}{\left(\langle a'_x \rangle\right)^2 + \left(\langle a'_y \rangle\right)^2}$$

Equation 34:                   ,

where

$<a_x>$ is a first filtered partial signal of the movement of the optical system (1) relative to a first measurement axis of the first measurement coordinate system;
$<a_y>$ is a second filtered partial signal of the movement of the optical system (1) relative to a second measurement axis of the first measurement coordinate system;
$<b_x>$ is a first filtered transformed partial signal of the first partial signal;
$<b_y>$ is a second filtered transformed partial signal of the second partial signal;
$<b'_x>$ is a third filtered partial signal of the movement of the optical system (1) relative to a third measurement axis of the second measurement coordinate system;
$<b'_y>$ is a fourth filtered partial signal of the movement of the optical system (1) relative to a fourth measurement axis of the second measurement coordinate system;
$<a'_x>$ is a third filtered transformed partial signal of the third partial signal; and where
$<a'_y>$ is a fourth filtered transformed partial signal of the fourth partial signal.

8. Method according to any of Claims 2 to 7, **characterized in that** the method includes at least one of the following steps:

- processing at least one of the specifiable transformation factors or specifiable inverse transformation factors by means of a high-pass filter (27, 28) and generating a high-pass filter signal; or
- processing at least one of the specifiable transformation factors or specifiable inverse transformation factors by means of a high-pass filter (27, 28), which has a cut-off frequency of 0.2 Hz, and generating a high-pass filter signal.

9. Method according to Claim 8, **characterized in that** the step of processing at least one of the specifiable transformation factors or specifiable inverse transformation factors comprises a step of processing a sum of at least two of the specifiable transformation factors or at least two of the specifiable inverse transformation factors.

10. Optical system (1) for imaging an object for carrying out a method according to any of Claims 1 to 9,

- having at least one first housing (2) and having at least one second housing (3),
wherein
- the first housing (2) is connected to the second housing (3) by means of at least one hinge bridge (4),
- the hinge bridge (4) comprises a first hinge part (5) arranged on the first housing (2),
- the hinge bridge (4) comprises a second hinge part (6) arranged on the second housing (3),
- the first housing (2) comprises at least one first objective (14A),
- the second housing (3) comprises at least one second objective (14B),
- the first housing (2) comprises at least one first rotational angle detector (38, 39) for measuring a movement of the optical system (1),
- the first housing (2) comprises at least one first image stabilizing unit (16A),
- the second housing (3) comprises at least one second image stabilizing unit (16B),
- the second housing (3) comprises at least one second rotational angle detector (41, 42) for measuring a movement of the optical system (1), and wherein
- at least one control unit (37, 37A, 37B) is arranged on the optical system (1), the first image stabilizing unit (16A) being connected to the said at least one control unit for the purpose of controlling a movement of the first image stabilizing unit (16A) and/or the second image stabilizing unit (16B) being connected to the said at least one control unit for the purpose of controlling a movement of the second image stabilizing unit (16B),
**characterized in that**
the control unit (37, 37A, 37B) comprises a memory unit to which a program code has been uploaded, the said program code, upon execution in a processor of the control unit (37, 37A, 37B), carrying out a method according to any of the preceding claims.

11. Optical system (1) according to Claim 10, **characterized in that** the optical system (1) comprises at least one of the following features:

- at least one low-pass filter (25, 26); or
- at least one high-pass filter (27, 28).


**Revendications**

1. Procédé de réglage d'une première position d'une première unité de stabilisation d'image (16A) dans un premier boîtier (2) d'un système optique (1) et d'une deuxième position d'une deuxième unité de stabilisation d'image (16B) dans un deuxième boîtier (3) du système optique (1),
dans lequel

- la première unité de stabilisation d'image (16A) est disposée dans le premier boîtier (2) en association avec au moins un premier détecteur d'angle de rotation (38, 39),
- la deuxième unité de stabilisation d'image (16B) est disposée dans le deuxième boîtier (3) en association avec au moins un deuxième détecteur d'angle de rotation (41, 42),
- le premier boîtier (2) est relié au deuxième boîtier (3) par l'intermédiaire d'au moins un pont articulé (4),
- le pont articulé (4) comporte une première partie formant charnière (5) disposée sur le premier boîtier (2) et une deuxième partie formant charnière (6) disposée sur le deuxième boîtier (3),

dans lequel
le procédé comporte les étapes suivantes :

- la détection d'un déplacement du système optique (1) au moyen du premier détecteur d'angle de rotation (38, 39) et la génération d'un premier signal de détecteur qui est basé sur un premier système de coordonnées de mesure du premier détecteur d'angle de rotation (38, 39) ;
- la détection du déplacement du système optique (1) au moyen du deuxième détecteur d'angle de rotation (41, 42) et la génération d'un deuxième signal de détecteur qui est basé sur un deuxième système de coordonnées de mesure du deuxième détecteur d'angle de rotation (41, 42), **caractérisé en ce que** le procédé comporte les étapes suivantes :
- la transformation du premier signal de détecteur en un troisième signal de détecteur qui est basé sur le deuxième système de coordonnées de mesure du deuxième détecteur d'angle de rotation (41, 42),
- la transformation du deuxième signal de détecteur en un quatrième signal de détecteur qui est basé sur le premier système de coordonnées de mesure du premier détecteur d'angle de rotation (38, 39),

- le calcul d'une première valeur moyenne à partir du troisième signal de détecteur et du deuxième signal de détecteur,
- le calcul d'une deuxième valeur moyenne à partir du quatrième signal de détecteur et du premier signal de détecteur,
- le déplacement de la première unité de stabilisation d'image (16A) sur la base de la deuxième valeur moyenne, ainsi que
- le déplacement de la deuxième unité de stabilisation d'image (16B) sur la base de la première valeur moyenne.

**2.** Procédé selon la revendication 1, **caractérisé en ce que** le procédé comporte les étapes suivantes :

- la transformation du premier signal de détecteur en troisième signal de détecteur s'effectue conformément à

$$\text{l'équation 3} \qquad b_x = a_x \cdot \gamma_1 + a_y \cdot \gamma_2$$

$$\text{l'équation 4} \qquad b_y = a_x \cdot \gamma_3 + a_y \cdot \gamma_4$$

où

$a_x$ est un premier signal partiel du déplacement du système optique (1) par rapport à un premier axe de mesure du premier système de coordonnées de mesure ;
$a_y$ est un deuxième signal partiel du déplacement du système optique (1) par rapport à un deuxième axe de mesure du premier système de coordonnées de mesure ;
$b_x$ est un premier signal partiel transformé du premier signal partiel ;
$b_y$ est un deuxième signal partiel transformé du deuxième signal partiel ;
$\gamma_1$ est un premier facteur de transformation prédéfinissable ;
$\gamma_2$ est un deuxième facteur de transformation prédéfinissable ;
$\gamma_3$ est un troisième facteur de transformation prédéfinissable ; et
$\gamma_4$ est un quatrième facteur de transformation prédéfinissable ;

- la transformation du deuxième signal de détecteur en le quatrième signal de détecteur s'effectue conformément à

$$\text{l'équation 5} \qquad a'_x = b'_x \cdot \gamma'_1 + b'_y \cdot \gamma'_2$$

$$\text{l'équation 6} \qquad a'_y = b'_x \cdot \gamma'_3 + b'_y \cdot \gamma'_4$$

où

$b'_x$ est un troisième signal partiel du déplacement du système optique (1) par rapport à un troisième axe de mesure du deuxième système de coordonnées de mesure ;
$b'_y$ est un quatrième signal partiel du déplacement du système optique (1) par rapport à un quatrième axe de mesure du deuxième système de coordonnées de mesure ;
$a'_x$ est un troisième signal partiel transformé du troisième signal partiel ;
$a'_y$ est un quatrième signal partiel transformé du quatrième signal partiel ;
$\gamma'_1$ est un premier facteur de transformation inverse prédéfinissable ;
$\gamma'_2$ est un deuxième facteur de transformation inverse prédéfinissable ;
$\gamma'_3$ est un troisième facteur de transformation inverse prédéfini ; et
$\gamma'_4$ est un quatrième facteur de transformation inverse prédéfinissable.

**3.** Procédé selon la revendication 2, **caractérisé en ce que** le procédé comporte au moins l'une des étapes suivantes :

- le calcul de la première moyenne s'effectue conformément à

l'équation 7
$$x_2 = \frac{(b'_x + b_x)}{2}$$

l'équation 8
$$y_2 = \frac{(b'_y + b_y)}{2}$$

où $x_2$ est une première coordonnée de rotation autour du troisième axe du deuxième système de coordonnées de mesure, et où $y_2$ est une deuxième coordonnée de rotation autour du quatrième axe du deuxième système de coordonnées de mesure, ou
- le calcul de la deuxième moyenne s'effectue conformément à

l'équation 9
$$x_1 = \frac{(a'_x + a_x)}{2}$$

l'équation 10
$$y_1 = \frac{(a'_y + a_y)}{2}$$

où xi est une première coordonnée de rotation autour du premier axe du premier système de coordonnées de mesure, et où $y_1$ est une deuxième coordonnée de rotation autour du deuxième axe du premier système de coordonnées de mesure.

4. Procédé selon la revendication 2 ou 3, **caractérisé en ce que** le procédé comporte au moins l'une des étapes suivantes :

- la détermination du premier facteur de transformation $\gamma_1$ prédéfinissable conformément à

l'équation 11
$$\gamma_1 = \frac{(a_y \cdot b_y + a_x \cdot b_x)}{(a_x)^2 + (a_y)^2}$$

- la détermination du deuxième facteur de transformation prédéfinissable $\gamma_2$ conformément à

l'équation 12
$$\gamma_2 = \frac{(a_y \cdot b_x - a_x \cdot b_y)}{(a_x)^2 + (a_y)^2}$$

- la détermination du troisième facteur de transformation prédéfinissable $\gamma_3$ conformément à

l'équation 13
$$\gamma_3 = \frac{(a_x \cdot b_y - a_y \cdot b_x)}{(a_x)^2 + (a_y)^2}$$

- la déterminer du quatrième facteur de transformation prédéfinissable $\gamma_4$ conformément à

l'équation 14
$$\gamma_4 = \frac{(a_x \cdot b_x + a_y \cdot b_y)}{(a_x)^2 + (a_y)^2}$$

- la détermination du premier facteur de transformation inverse prédéfinissable $\gamma'_1$ conformément à

l'équation 15
$$\gamma'_1 = \frac{(a'_y \cdot b'_y + a'_x \cdot b'_x)}{(a'_x)^2 + (a'_y)^2}$$

- la détermination du deuxième facteur de transformation inverse prédéfinissable $\gamma'_2$ conformément à

$$\text{l'équation 16} \qquad \gamma'_2 = \frac{(a'_x \cdot b'_y - a'_y \cdot b'_x)}{(a'_x)^2 + (a'_y)^2}$$

- la détermination du troisième facteur de transformation inverse prédéfinissable $\gamma'_3$ conformément à

$$\text{l'équation 17} \qquad \gamma'_3 = \frac{(a'_y \cdot b'_x - a'_x \cdot b'_y)}{(a'_x)^2 + (a'_y)^2}$$

- la détermination du quatrième facteur de transformation inverse prédéfinissable $\gamma'_4$ conformément à

$$\text{l'équation 18} \qquad \gamma'_4 = \frac{(a'_x \cdot b'_x + a'_y \cdot b'_y)}{(a'_x)^2 + (a'_y)^2}$$

**5.** Procédé selon la revendication 3 ou 4, **caractérisé en ce qu'**au moins l'une des équations suivantes s'applique au procédé :

$$\text{équation 19} \qquad \gamma_2 = -\gamma_3$$

$$\text{équation 20} \qquad \gamma'_2 = -\gamma_3$$

$$\text{équation 21} \qquad \gamma'_1 = \gamma_1$$

$$\text{équation 22} \qquad \gamma'_4 = \gamma_4$$

$$\text{équation 23} \qquad \gamma_2 = -\sin(\arccos(\gamma_1))$$

$$\text{équation 24} \qquad \gamma_1 = \cos(\arcsin(\gamma_2))$$

$$\text{équation 25} \qquad \gamma'_2 = \sin(\arccos(\gamma'_1))$$

$$\text{équation 26} \qquad \gamma'_1 = \cos(\arcsin(\gamma'_2))$$

**6.** Procédé selon l'une des revendications 1 à 5, **caractérisé en ce que** le procédé comporte au moins l'une des étapes suivantes :

- le traitement du premier signal de détecteur au moyen d'un premier filtre passe-bas (25) et la génération d'un premier signal de détecteur filtré ;
- le traitement du premier signal de détecteur au moyen d'un premier filtre passe-bas (25), qui présente une fréquence de coupure de 1 Hz, et la génération d'un premier signal de détecteur filtré ;
- le traitement du deuxième signal de détecteur au moyen d'un deuxième filtre passe-bas (26) et la génération d'un deuxième signal de détecteur filtré ; ou
- le traitement du deuxième signal de détecteur au moyen d'un deuxième filtre passe-bas (26), qui présente une fréquence de coupure de 1 Hz, et la génération d'un deuxième signal de détecteur filtré.

**7.** Procédé selon la revendication 2, **caractérisé en ce que** le procédé comporte au moins l'une des étapes suivantes :

- la détermination du premier facteur de transformation prédéfinissable $\gamma_1$ conformément à

l'équation 27 $$\gamma_1 = \frac{(<a_y> \cdot <b_y> + <a_x> \cdot <b_x>)}{(<a_x>)^2 + (<a_y>)^2}$$

- la détermination du deuxième facteur de transformation prédéfinissable $\gamma_2$ conformément à

l'équation 28 $$\gamma_2 = \frac{(<a_y> \cdot <b_x> - <a_x> \cdot <b_y>)}{(<a_x>)^2 + (<a_y>)^2}$$

- la détermination du troisième facteur de transformation prédéfinissable $\gamma_3$ conformément à

l'équation 29 $$\gamma_3 = \frac{(<a_x> \cdot <b_y> - <a_y> \cdot <b_x>)}{(<a_x>)^2 + (<a_y>)^2}$$

- la détermination du quatrième facteur de transformation prédéfinissable $\gamma_4$ conformément à

l'équation 30 $$\gamma_4 = \frac{(<a_x> \cdot <b_x> + <a_y> \cdot <b_y>)}{(<a_x>)^2 + (<a_y>)^2}$$

- la détermination du premier facteur de transformation inverse prédéfinissable $\gamma'_1$ conformément à

l'équation 31 $$\gamma'_1 = \frac{(<a'_y> \cdot <b'_y> + <a'_x> \cdot <b'_x>)}{(<a'_x>)^2 + (<a'_y>)^2}$$

- la détermination du second facteur de transformation inverse prédéfinissable $\gamma'_2$ conformément à

l'équation 32 $$\gamma'_2 = \frac{(<a'_x> \cdot <b'_y> - <a'_y> \cdot <b'_x>)}{(<a'_x>)^2 + (<a'_y>)^2}$$

- la détermination du troisième facteur de transformation inverse prédéfinissable $\gamma'_3$ conformément à

l'équation 33 $$\gamma'_3 = \frac{(<a'_y> \cdot <b'_x> - <a'_x> \cdot <b'_y>)}{(<a'_x>)^2 + (<a'_y>)^2}$$

- la détermination du quatrième facteur de transformation inverse prédéfinissable $\gamma'_4$ conformément à

l'équation 34 $$\gamma'_4 = \frac{(<a'_x> \cdot <b'_x> + <a'_y> \cdot <b'_y>)}{(<a'_x>)^2 + (<a'_y>)^2}$$

où

$<a_x>$ est un premier signal partiel filtré du déplacement du système optique (1) par rapport à un premier axe de mesure du premier système de coordonnées de mesure ;
$<a_y>$ est un deuxième signal partiel filtré du déplacement du système optique (1) par rapport à un deuxième axe de mesure du premier système de coordonnées de mesure ;
$<b_x>$ est un premier signal partiel transformé filtré du premier signal partiel ;
$<b_y>$ est un deuxième signal partiel transformé filtré du deuxième signal partiel ;
$<b'_x>$ est un troisième signal partiel filtré du déplacement du système optique (1) par rapport à un troisième axe de mesure du deuxième système de coordonnées de mesure ;

$<b'_y>$ est un quatrième signal partiel filtré du déplacement du système optique (1) par rapport à un quatrième axe de mesure du deuxième système de coordonnées de mesure ;

$<a'_x>$ est un troisième signal partiel transformé filtré du troisième signal partiel ; et où

$<a'_y>$ est un quatrième signal partiel transformé filtré du quatrième signal partiel.

**8.** Procédé selon l'une des revendications 2 à 7, **caractérisé en ce que** le procédé comprend au moins l'une des étapes suivantes :

- le traitement d'au moins l'un des facteurs de transformation prédéfinissables ou des facteurs de transformation inverses prédéfinissables au moyen d'un filtre passe-haut (27, 28) et la génération d'un signal de filtre passe-haut ; ou
- le traitement d'au moins l'un des facteurs de transformation prédéfinissables ou des facteurs de transformation inverses prédéfinissables au moyen d'un filtre passe-haut (27, 28) présentant une fréquence de coupure de 0,2 Hz, et la génération d'un signal de filtre passe-haut.

**9.** Procédé selon la revendication 8, **caractérisé en ce que** le traitement d'au moins l'un des facteurs de transformation prédéfinissables ou des facteurs de transformation inverses prédéfinissables comprend un traitement d'une somme d'au moins deux des facteurs de transformation prédéfinissables ou d'au moins deux des facteurs de transformation inverses prédéfinissables.

**10.** Système optique (1) de formation d'image d'un objet pour la mise en oeuvre d'un procédé selon l'une quelconque des revendications 1 à 9,

- comprenant au moins un premier boîtier (2) et au moins un deuxième boîtier (3),

dans lequel

- le premier boîtier (2) est relié au deuxième boîtier (3) par l'intermédiaire d'au moins un pont articulé (4),
- le pont articulé (4) comporte une première partie formant charnière (5) disposée sur le premier boîtier (2),
- le pont articulé (4) comporte une deuxième partie formant charnière (6) disposée sur le deuxième boîtier (3),
- le premier boîtier (2) comporte au moins un premier objectif (14A),
- le deuxième boîtier (3) comporte au moins un deuxième objectif (14B),
- le premier boîtier (2) comporte au moins un premier détecteur d'angle de rotation (38, 39) pour mesurer un déplacement du système optique (1),
- le premier boîtier (2) comporte au moins une première unité de stabilisation d'image (16A),
- le deuxième boîtier (3) comporte au moins une deuxième unité de stabilisation d'image (16B),
- le deuxième boîtier (2) comporte au moins un deuxième détecteur d'angle de rotation (41, 42) pour mesurer un déplacement du système optique (1), et

dans lequel

- il est prévu sur le système optique (1) au moins une unité de commande (37, 37A, 37B) qui est reliée à la première unité de stabilisation d'image (16A) pour commander un déplacement de la première unité de stabilisation d'image (16A) et/ou qui est reliée à la deuxième unité de stabilisation d'image (16B) pour commander un déplacement de la deuxième unité de stabilisation d'image (16B),

**caractérisé en ce que**

l'unité de commande (37, 37A, 37B) comporte une unité de stockage dans laquelle est chargé un code de programme qui, lorsqu'il est exécuté dans un processeur de l'unité de commande (37, 37A, 37B), met en oeuvre un procédé selon l'une des revendications précédentes.

**11.** Système optique (1) selon la revendication 10, **caractérisé en ce que** le système optique (1) comporte au moins l'un des éléments caractéristiques suivants :

- au moins un filtre passe-bas (25, 26) ; ou
- au moins un filtre passe-haut (27, 28).

Fig 1A

Fig. 1B

Fig. 2A

Fig. 2B

Fig. 2C

Fig. 2D

Fig. 2E

Fig. 3

Fig. 4

Fig. 5

EP 3 686 653 B1

Fig. 6

Fig. 7

**IN DER BESCHREIBUNG AUFGEFÜHRTE DOKUMENTE**

**In der Beschreibung aufgeführte Patentdokumente**

- DE 2353101 C3
- DE 3933255 C2
- US 5910859 A
- US 5672862 A
- DE 19818467 A1
- US 20040125213 A1